# FASCICULE DE BREVET EUROPEEN

(11) **EP 3 532 302 B1**
(45) Date de publication et mention de la délivrance du brevet: **26.08.2020**
(21) Numéro de dépôt: 17780500.9
(22) Date de dépôt: 25.09.2017
(51) Int. Cl.: B60C 1/00, B60C 9/00, C08G 14/06, C08G 73/02, C09J 179/02, C09J 179/04, C08G 73/06, C09J 161/34

(54) **RENFORT MÉTALLIQUE OU MÉTALLISÉ DONT LA SURFACE EST REVÊTUE D'UNE POLYBENZOXAZINE**
METALLISCHE ODER METALLISIERTE VERSTÄRKUNG DEREN OBERFLÄCHE BESCHICHTET IST MIT EINER POLYBENZOXAZIN
METALLIC OR METALLISED REINFORCEMENT WHICH SURFACE IS COATED WITH A POLYBENZOXAZINE

(30) Priorité: 26.10.2016 FR 1660377
(43) Date de publication de la demande: 04.09.2019
(73) Titulaire: Compagnie Générale des Etablissements Michelin, 63000 Clermont-Ferrand (FR)
(72) Inventeur: FEDURCO, Milan, 63040 Clermont-Ferrand Cedex 9 (FR); RIBEZZO, Marco, 63040 Clermont-Ferrand Cedex 9 (FR)
(74) Mandataire: Desbordes, Guillaume
(86) Numéro de dépôt international: PCT/FR2017/052566
(87) Numéro de publication internationale: WO 2018/078228

(56) Documents cités:
- WO-A1-2007/064801
- WO-A1-2013/148408
- WO-A1-2014/173838
- WO-A1-2016/088663
- SHENGFANG LI ET AL: "Synthesis, characterization, and polymerization of brominated benzoxazine monomers and thermal stability/flame retardance of the polymers generated", POLYMERS FOR ADVANCED TECHNOLOGIES, vol. 21, no. 4, 17 mars 2009 (2009-03-17), pages 229-234, XP055063536, ISSN: 1042-7147, DOI: 10.1002/pat.1418

## Description

### 1. DOMAINE DE L'INVENTION

La présente invention est relative aux résines thermodurcissables, utilisables notamment dans les systèmes adhésifs destinés en particulier au collage de métal à du caoutchouc.

Elle est plus particulièrement relative aux renforts métalliques ou métallisés revêtus de polymères utilisables comme couches adhésives dans des composites métal / caoutchouc destinés à la fabrication d'articles en caoutchouc tels que des bandages, pneumatiques ou non pneumatiques, pour véhicules automobiles.

### 2. ETAT DE LA TECHNIQUE

Les composites métal / caoutchouc, en particulier pour bandages pour véhicules automobiles, sont bien connus. Ils sont le plus souvent constitués d'une matrice en caoutchouc généralement diénique, réticulable au soufre, comportant des éléments de renforcement (ou « renforts ») métalliques tels que des fils, films, rubans ou câbles en acier au carbone.

Soumis à des contraintes très importantes lors du roulage des bandages, notamment à des compressions, flexions ou variations de courbure répétées, ces composites doivent de manière connue satisfaire à un grand nombre de critères techniques, parfois contradictoires, tels qu'uniformité, flexibilité, endurance en flexion et en compression, résistance à la traction, à l'usure et à la corrosion, et maintenir ces performances à un niveau très élevé aussi longtemps que possible.

On comprend aisément que l'interphase adhésive entre caoutchouc et renforts joue un rôle prépondérant dans la pérennité de ces performances. Le procédé traditionnel pour relier les compositions de caoutchouc à de l'acier au carbone consiste à revêtir la surface de l'acier avec du laiton (alliage cuivre-zinc), la liaison entre l'acier et la matrice de caoutchouc étant assurée par sulfuration du laiton lors de la vulcanisation ou cuisson du caoutchouc. Pour améliorer l'adhésion, on utilise en outre généralement, dans ces compositions de caoutchouc, des sels organiques ou des complexes de métal tels que des sels de cobalt, en tant qu'additifs promoteurs d'adhésion.

Or, on sait que l'adhésion entre l'acier au carbone et la matrice de caoutchouc est susceptible de s'affaiblir au cours du temps, du fait de l'évolution progressive des sulfures formés sous l'effet des différentes sollicitations rencontrées, notamment mécaniques et/ou thermiques, le processus de dégradation ci-dessus pouvant être accéléré en présence d'humidité. D'autre part, l'utilisation de sels de cobalt rend les compositions de caoutchouc plus sensibles à l'oxydation et au vieillissement, et en augmente significativement le coût, sans compter qu'il est souhaitable de supprimer à terme l'emploi de tels sels de cobalt dans les compositions de caoutchouc, en raison de l'évolution récente de la réglementation européenne sur ce type de sels métalliques.

Pour toutes les raisons exposées ci-dessus, les fabricants de composites métal / caoutchouc, en particulier les manufacturiers de bandages pour véhicules automobiles, sont à la recherche de solutions adhésives nouvelles pour faire coller les renforts métalliques aux compositions de caoutchouc, tout en palliant, au moins en partie, les inconvénients précités.

C'est ainsi que les demandes WO 2014/063963, WO 2014/063968, WO 2014/173838, WO 2014/173839 récemment publiées, déposées par les Demanderesses, ont décrit des polymères nouveaux à unités urée, uréthane ou thiourée, ainsi que leurs monomères de départ, qui répondent aux objectifs ci-dessus. Utilisés notamment comme primaire d'adhésion sur métal dans des composites métal / caoutchouc, ces polymères permettent très avantageusement de coller le métal aux matrices de caoutchouc en utilisant ensuite de simples colles textiles telles que des colles « RFL » (résorcinol-formaldéhyde-latex) ou autres compositions adhésives équivalentes, ou encore directement (c'est-à-dire sans emploi de telles colles) à ces matrices de caoutchouc lorsque ces dernières contiennent par exemple des élastomères insaturés fonctionnalisés appropriés tels que des élastomères époxydés. Ainsi peuvent être supprimés notamment les sels de cobalt (ou autres sels métalliques) dans les compositions de caoutchouc destinées à être reliées à des renforts métalliques laitonnés.

Poursuivant leurs recherches, les Demanderesses ont trouvé un polymère nouveau, du type thermodurcissable, qui à température ambiante présente les mêmes performances adhésives, vis-à-vis du métal et du caoutchouc, que les polymères précités mais qui présente une fois thermodurci (réticulé) une stabilité thermique et chimique encore améliorée. En outre, sa microstructure spécifique permet très avantageusement d'ajuster la flexibilité de la molécule selon les applications particulières visées.

### 3. BREVE DESCRIPTION DE L'INVENTION

Ainsi, la présente invention concerne un renfort métallique ou métallisé, dont au moins la surface est au moins en partie métallique, au moins ladite partie métallique étant revêtue d'une polybenzoxazine comportant au moins des unités récurrentes comportant au moins un motif répondant aux formules (I) ou (II) : 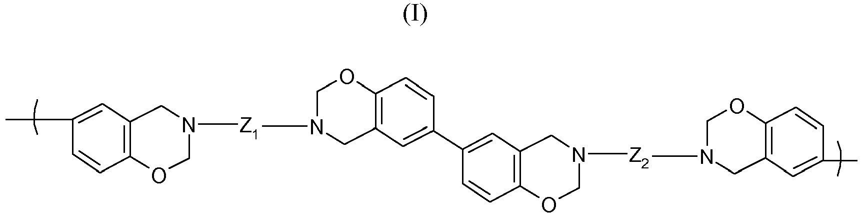 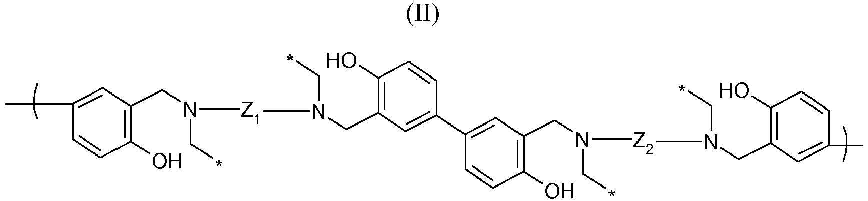 dans lesquelles Z₁ et Z₂, identiques ou différents, représentent un groupement de liaison au moins divalent, aliphatique, cycloaliphatique ou aromatique, comportant au moins un atome de carbone et optionnellement au moins un hétéroatome choisi parmi O, S, N et P.

L'invention concerne en particulier un tel renfort sous forme d'un fil, film, ruban ou câble dont au moins une partie de la surface est en acier, en particulier en acier au carbone, ledit acier pouvant être un acier clair, c'est-à-dire non revêtu, ou encore être revêtu d'au moins un second métal dit métal de surface, ce dernier étant préférentiellement choisi dans le groupe constitué par aluminium, cuivre, zinc et les alliages d'au moins un de ces métaux avec au moins un autre métal.

Grâce à la polybenzoxazine ci-dessus, le renfort de l'invention est apte à coller à des matrices de polymères éthyléniquement insaturés tels que du caoutchouc, ceci notamment sans que soit nécessaire l'emploi de sels de cobalt dans ces matrices de polymère.

L'invention concerne également l'utilisation d'un tel renfort pour le renforcement d'un article en caoutchouc, en particulier un bandage, pneumatique ou non pneumatique, pour véhicule automobile. L'invention concerne également tout article en en caoutchouc, à l'état cru (non réticulé) ou cuit (à l'état réticulé), en particulier tout bandage, pneumatique ou non pneumatique, pour véhicule automobile, qui est renforcé par au moins un tel renfort.

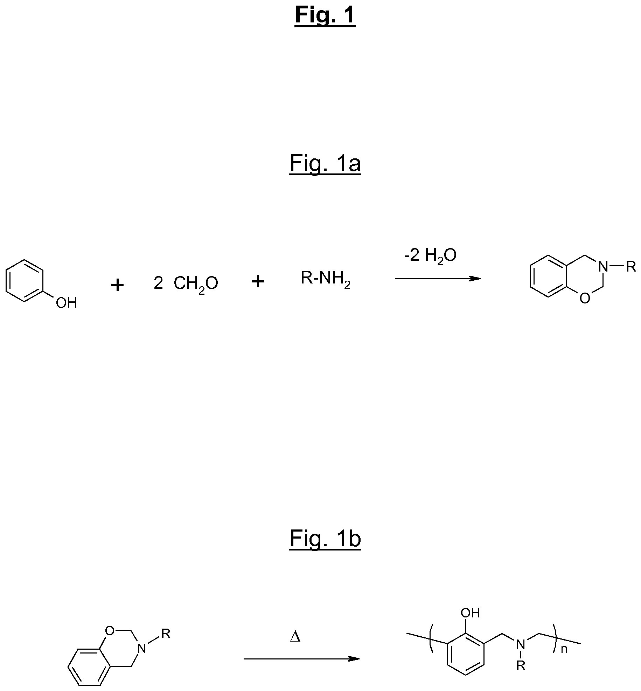

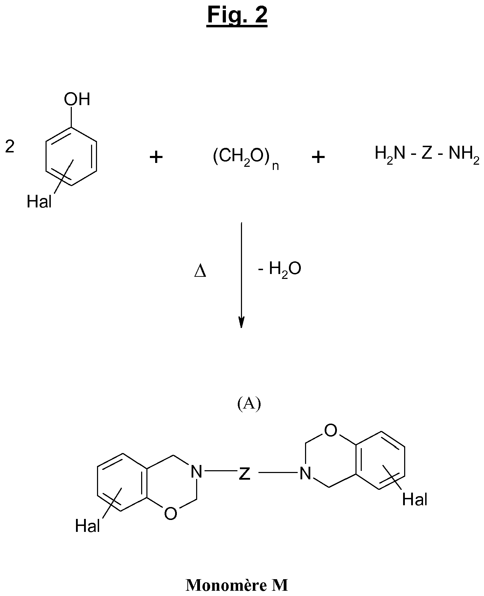

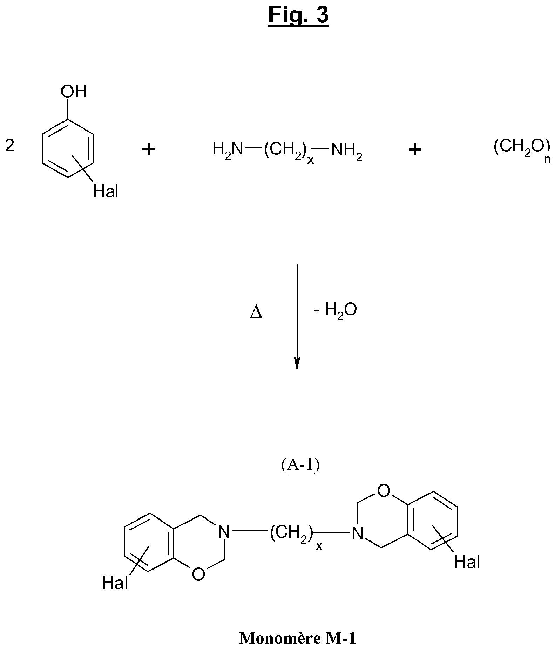

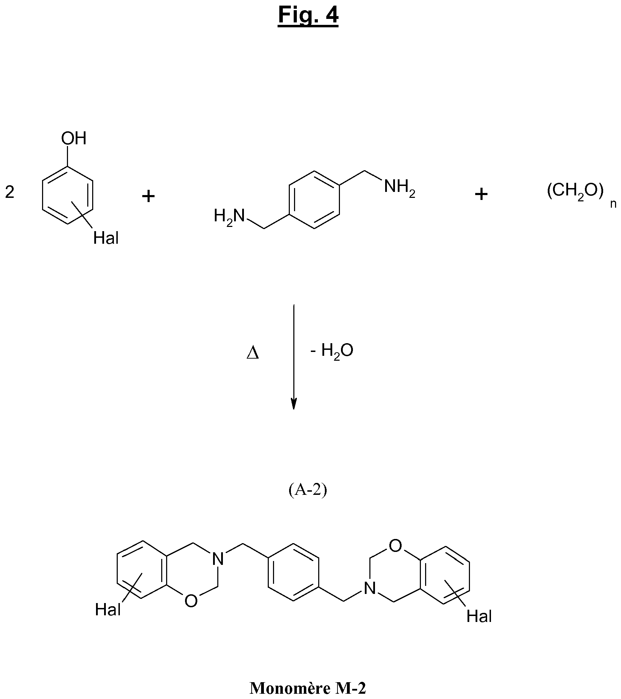

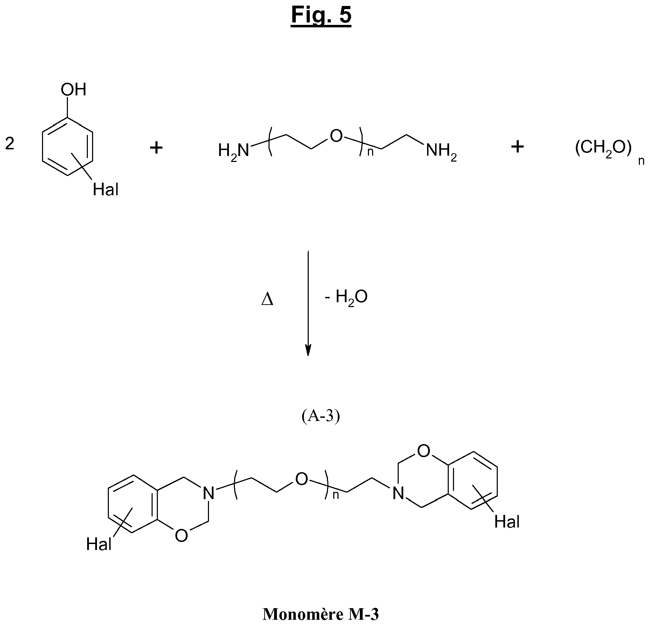

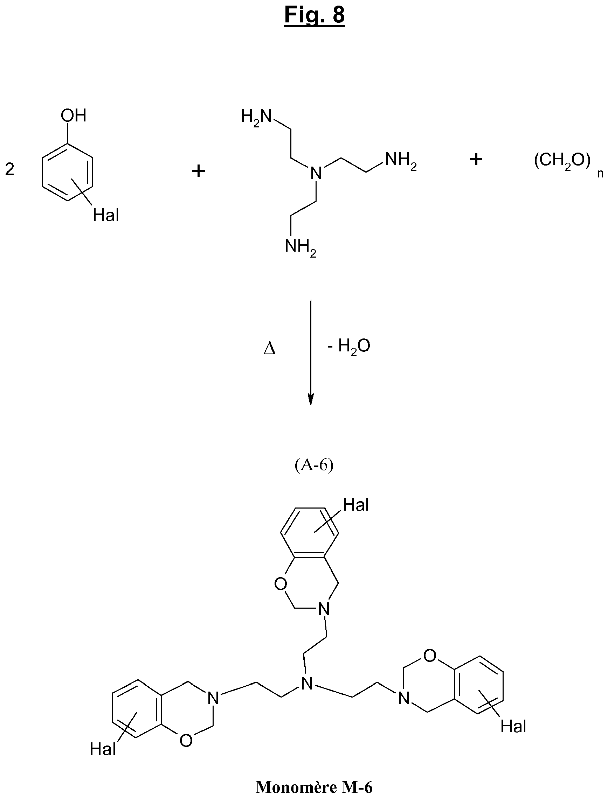

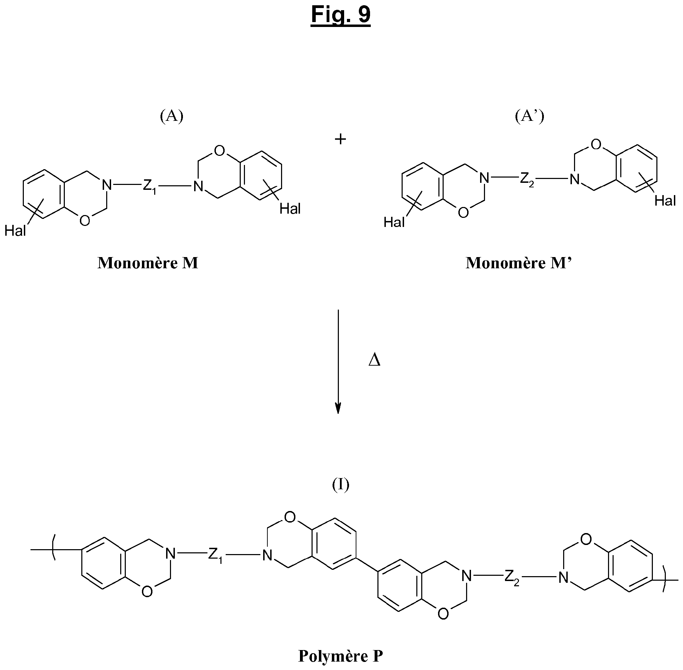

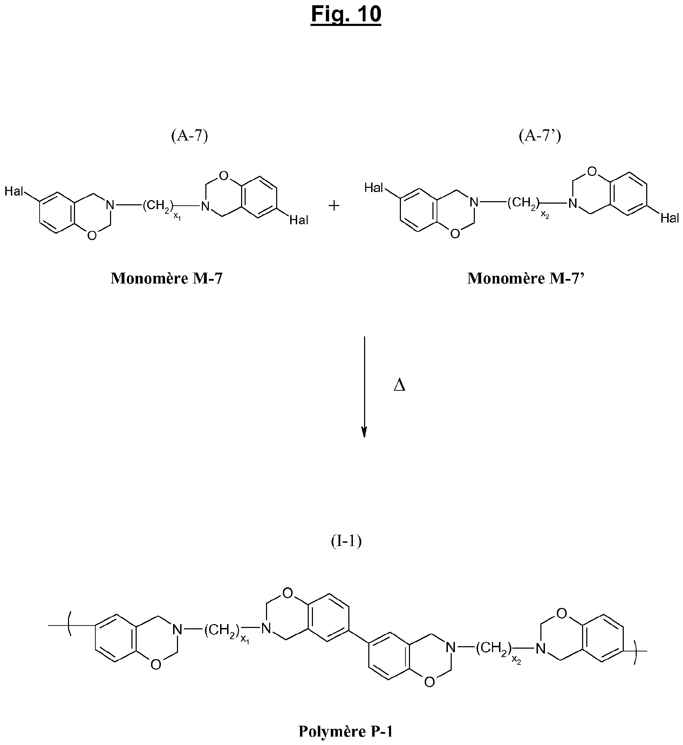

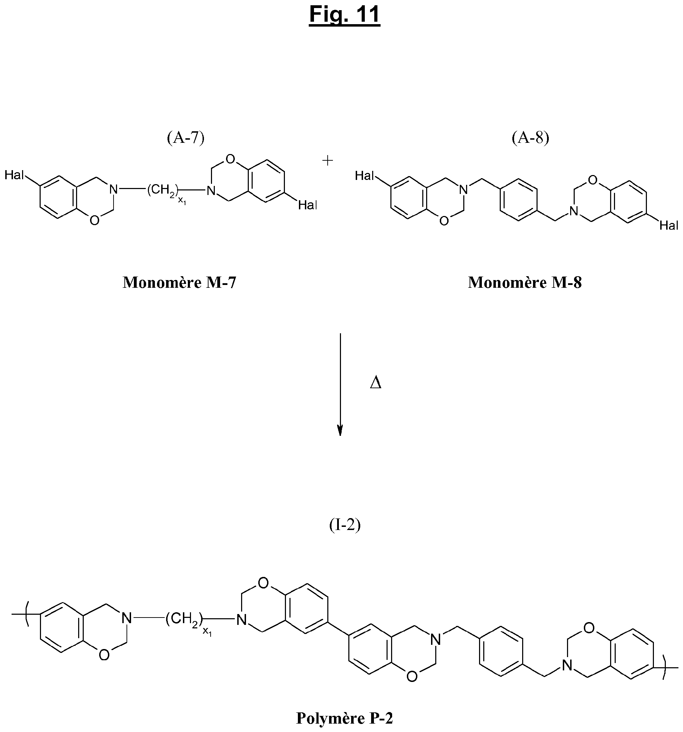

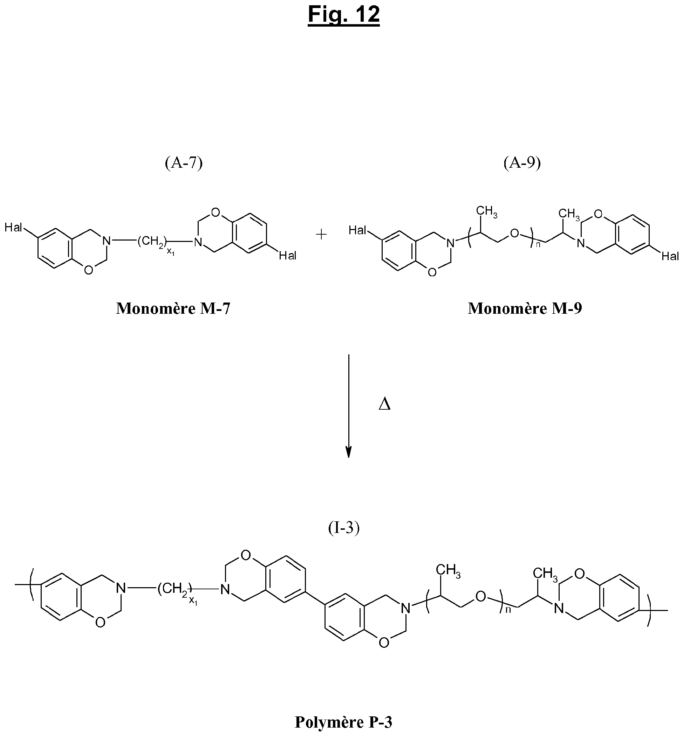

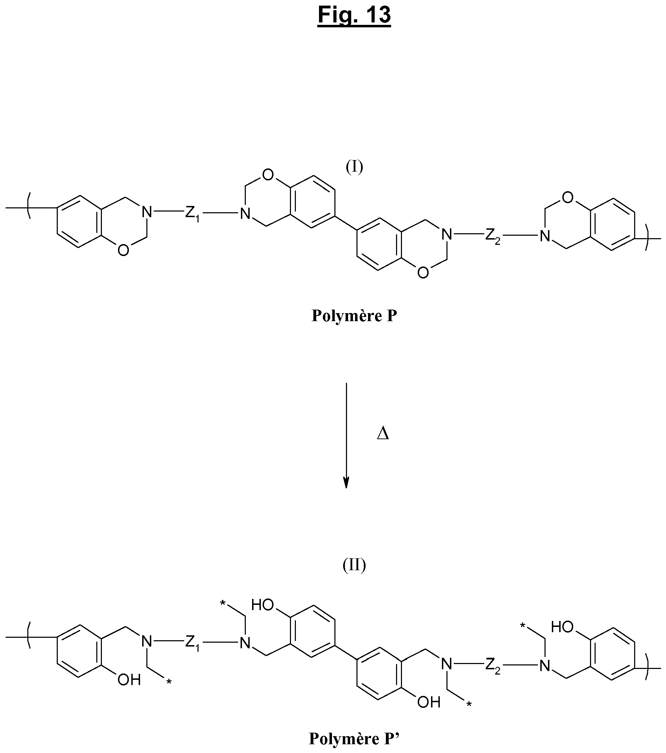

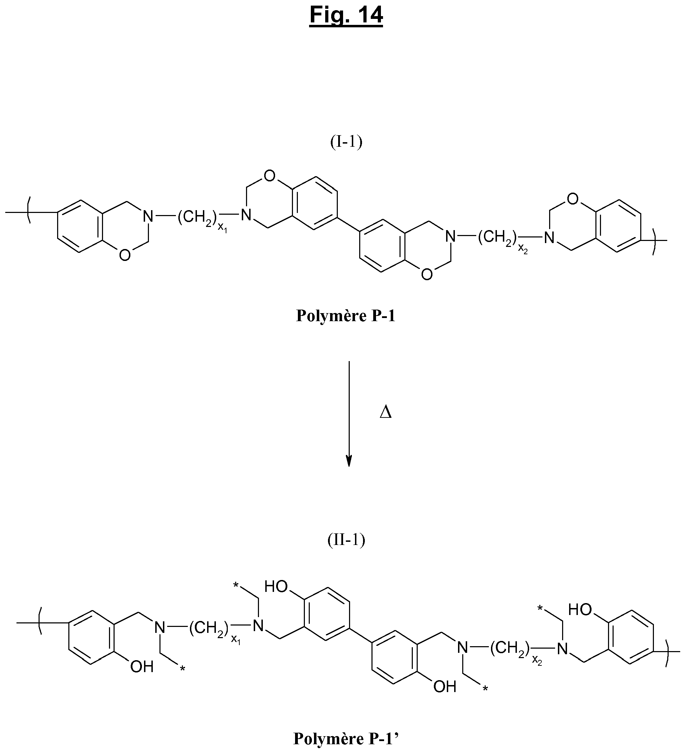

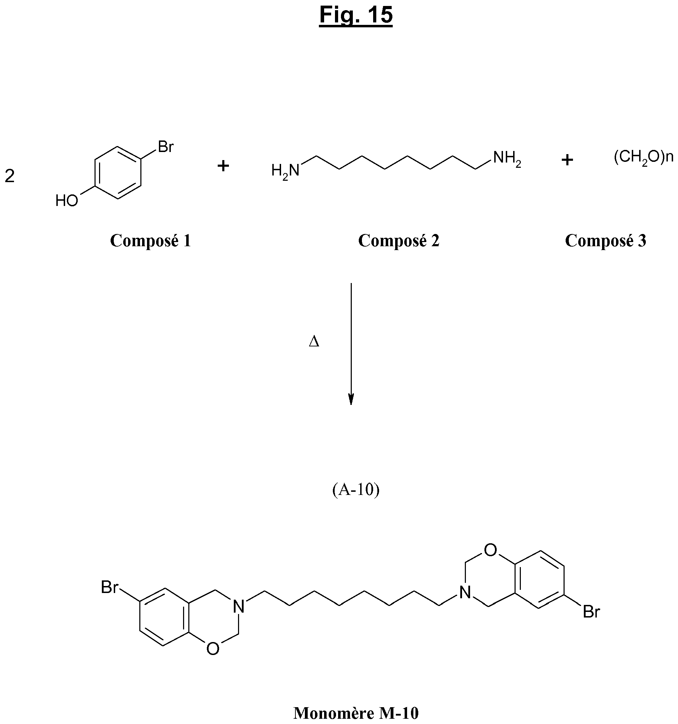

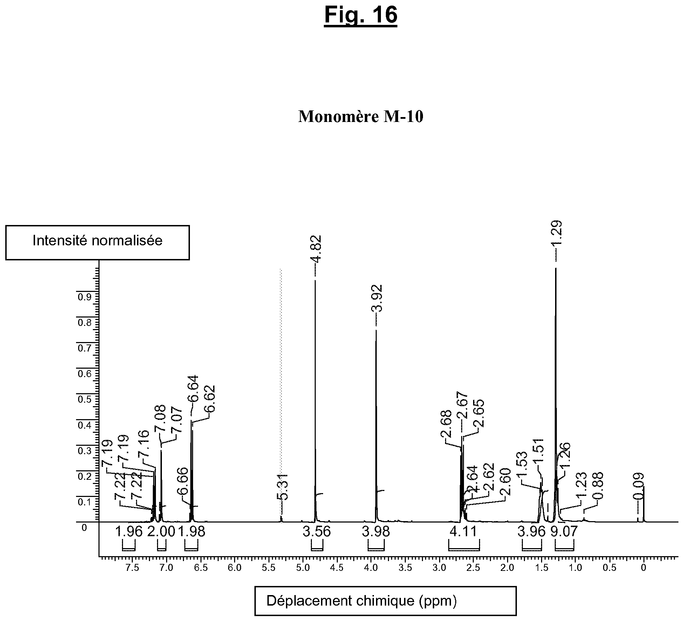

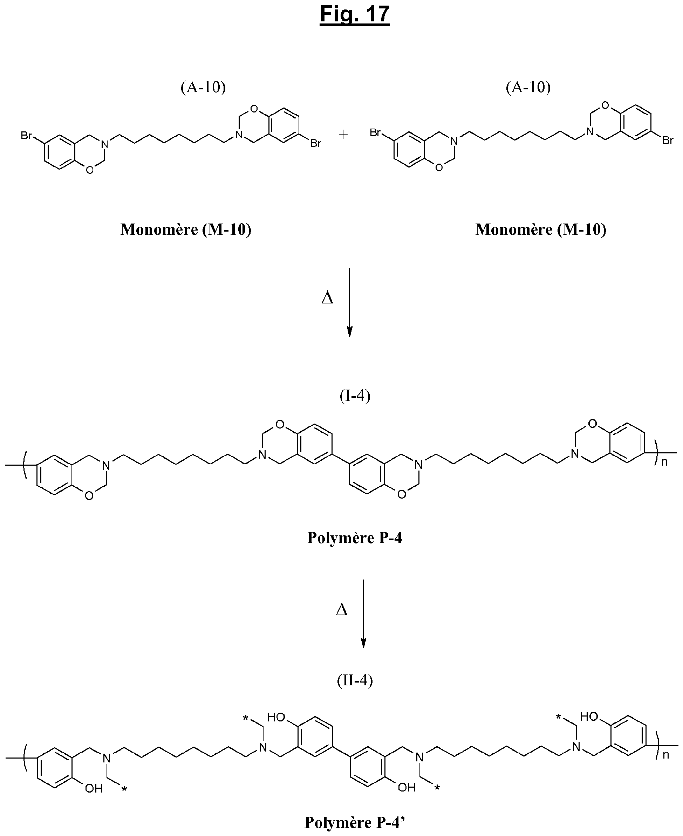

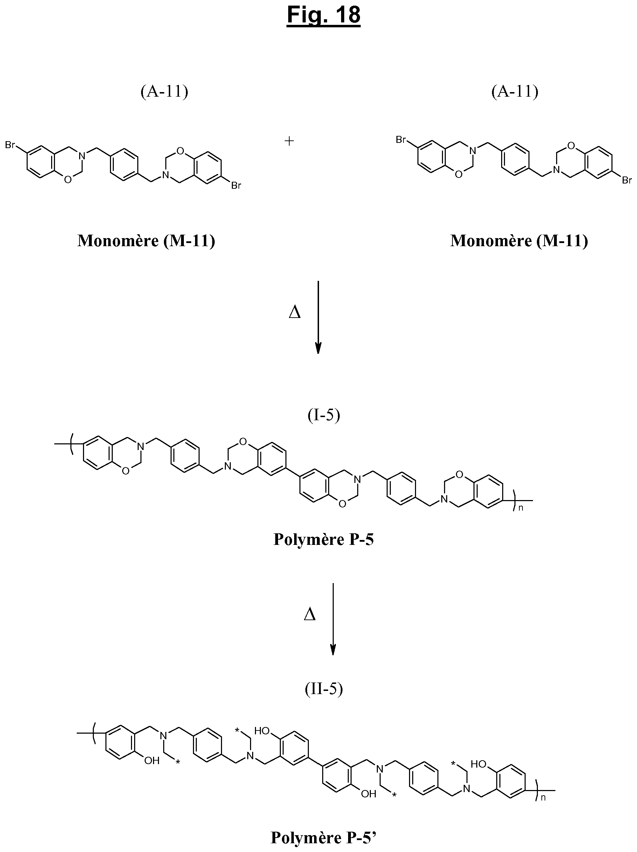

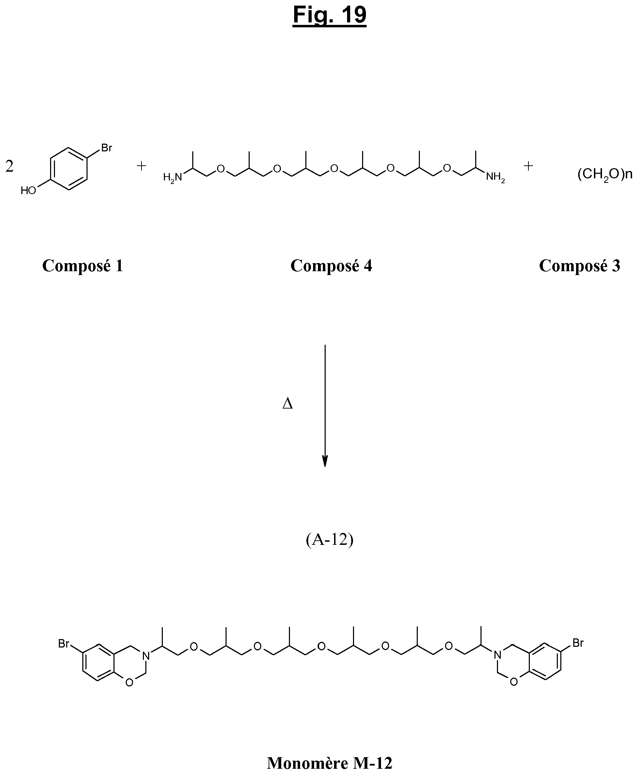

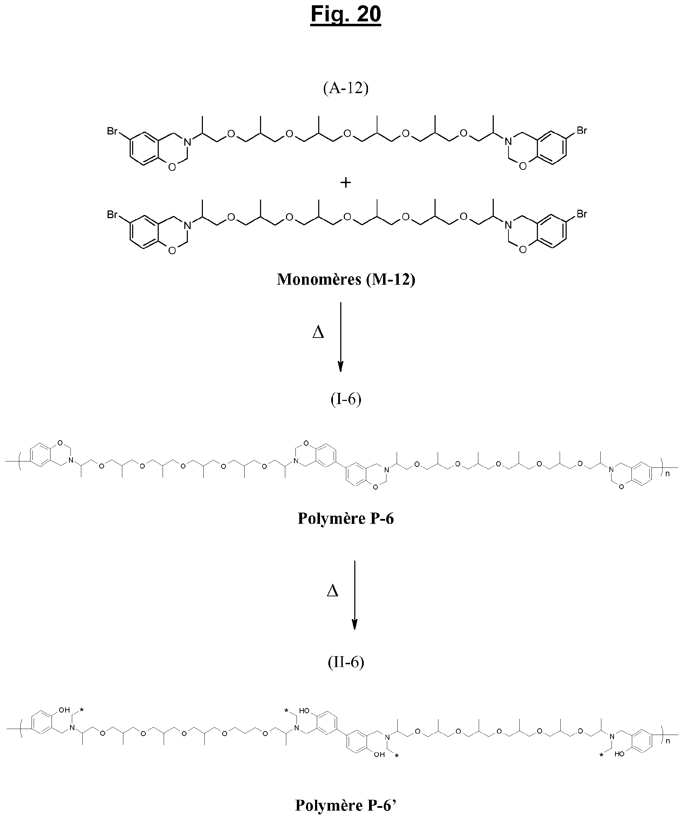

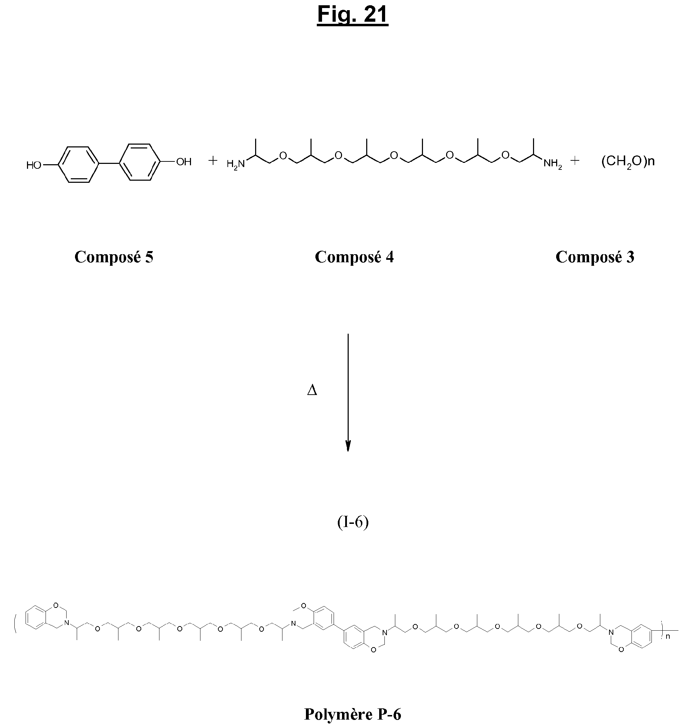

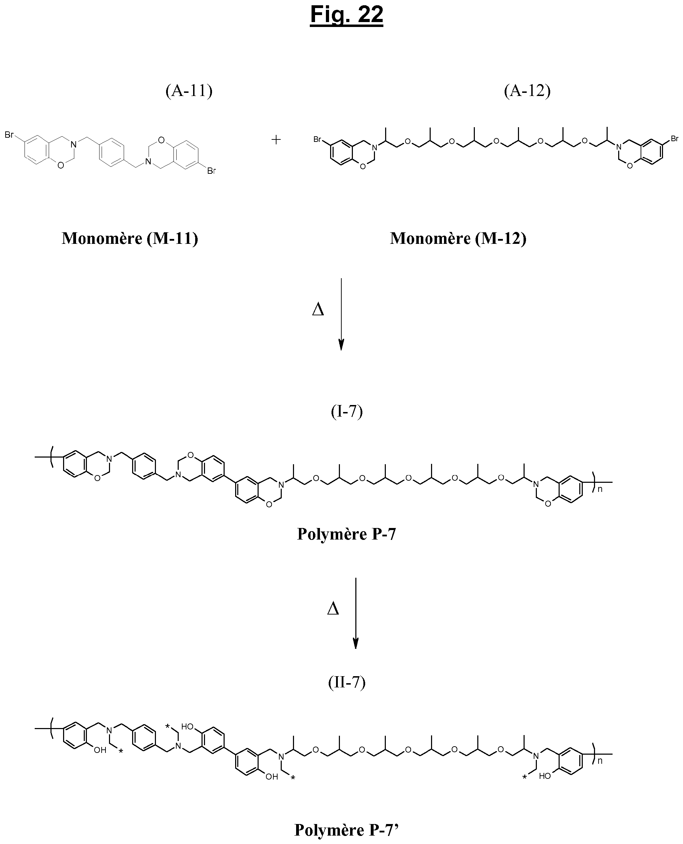

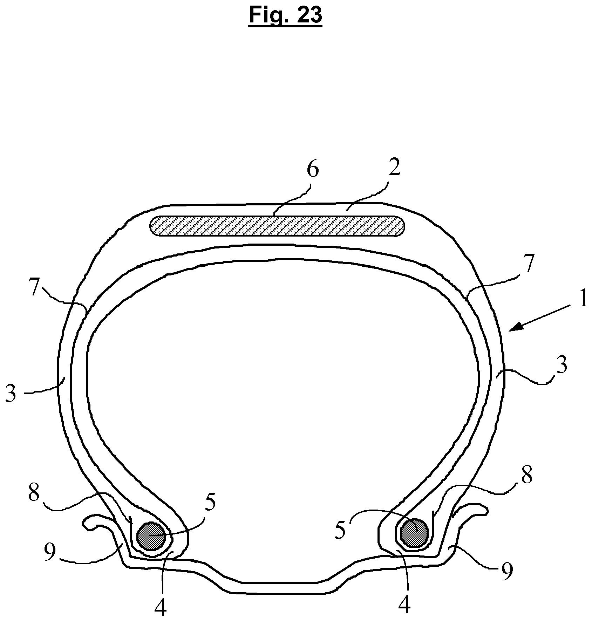

L'invention ainsi que ses avantages seront aisément compris à la lumière de la description détaillée et des exemples de réalisation qui suivent, ainsi que des figures 1 à 23 relatives à ces exemples qui représentent ou schématisent :
- le principe général de synthèse d'un composé benzoxazine à partir de trois composés, phénol, formaldéhyde et amine (R résidu de l'amine) (Fig. la) ;
- le mécanisme d'ouverture, par apport thermique, du cycle oxazine (« *ring-opening* ») d'un tel composé benzoxazine (Fig. 1b) ;
- un schéma de synthèse général, à partir d'un phénol halogéné (le symbole Hal représentant un halogène), de paraformaldéhyde et d'une diamine, d'une benzoxazine halogénée de formule (A) (Monomère noté « M ») utilisable pour la synthèse d'une polybenzoxazine convenant au renfort de l'invention (Fig. 2) ;
- un schéma de synthèse possible, à partir de phénol halogéné, p-formaldéhyde et d'une diamine spécifique du type aliphatique, d'une benzoxazine halogénée particulière de formule (A-1) (Monomère noté M-1) utilisable pour la synthèse d'une polybenzoxazine convenant au renfort de l'invention (Fig. 3) ;
- un autre schéma de synthèse possible, à partir de phénol halogéné, p-formaldéhyde et d'une autre diamine spécifique, du type aromatique, d'un autre exemple de benzoxazine halogénée particulière de formule (A-2) (Monomère noté M-2) utilisable pour la synthèse d'une autre polybenzoxazine convenant au renfort de l'invention (Fig. 4) ;
- trois autres schémas de synthèse possibles, à partir de phénol halogéné, p-formaldéhyde et de diamines spécifiques toutes aliphatiques, d'autres exemples de benzoxazines halogénées particulières de formules respectives (A-3), (A-4) et (A-5) (Monomères notés M-3, M-4 et M-5) utilisables pour la synthèse d'autres polybenzoxazines convenant au renfort de l'invention (Fig. 5, Fig. 6 et Fig. 7) ;
- un autre schéma de synthèse possible, à partir de phénol halogéné, p-formaldéhyde et d'une triamine aliphatique spécifique, d'un autre exemple de benzoxazine halogénée particulière de formule (A-6) (Monomère noté M-6) utilisable pour la synthèse d'une autre polybenzoxazine convenant au renfort de l'invention (Fig. 8) ;
- un schéma de synthèse général d'un polymère polybenzoxazine (Polymère noté « P ») convenant au renfort de l'invention, à partir de la benzoxazine halogénée de formule (A) (Monomère M) de la Fig. 2 et d'une autre benzoxazine halogénée (Monomère M') de formule générique (A') (Fig. 9) ;
- un schéma de synthèse d'un polymère polybenzoxazine particulier (Polymère noté P-1) convenant au renfort de l'invention, à partir d'une benzoxazine halogénée particulière de formule (A-7) (Monomère M-7) et d'une autre benzoxazine halogénée (Monomère M-7') particulière de formule (A-7') (Fig. 10) ;
- un schéma de synthèse d'une autre polybenzoxazine (Polymère noté P-2) convenant au renfort de l'invention, à partir de la benzoxazine halogénée particulière de formule (A-7) (Monomère M-7) de la Fig. 10 précédente et d'une autre benzoxazine halogénée particulière de formule (A-8) (Monomère M-8) (Fig. 11) ;
- un schéma de synthèse d'une autre polybenzoxazine (Polymère noté P-3) convenant au renfort de l'invention, à partir de la benzoxazine halogénée de formule (A-7) (Monomère M-7) et d'une autre benzoxazine halogénée particulière de formule (A-9) (Monomère M-9) (Fig. 12) ;
- la polybenzoxazine (Polymère noté ici P') de la Fig. 9 une fois ses cycles oxazine ouverts après traitement thermique du Polymère P (Fig. 13) ;
- la polybenzoxazine particulière (Polymère noté P-1') de la Fig. 10, une fois ses cycles oxazine ouverts après traitement thermique du Polymère P-1 (Fig. 14) ;
- le schéma de synthèse, à partir de phénol bromé (composé 1), p-formaldéhyde (composé 3) et d'une diamine spécifique aliphatique (composé 2), d'une dibenzoxazine bromée particulière de formule (A-10) (Monomère noté M-10) utilisable pour la synthèse de polybenzoxazines (Polymère P-4 et P-4' de la figure 17) convenant au renfort de l'invention (Fig. 15) ;
- le spectre RMN ¹H (500 MHz) du Monomère M-10 dissous dans CD₂Cl₂ (Fig. 16) ;
- le schéma de synthèse d'une polybenzoxazine (homopolymère) particulière (Polymère noté P-4) convenant au renfort de l'invention, à partir de la seule benzoxazine halogénée particulière de formule (A-10) (Monomère M-10) de la Fig. 15 précédente, ainsi que la structure de ce polymère une fois ses cycles oxazine ouverts (Polymère noté P-4') (Fig. 17) ;
- le schéma de synthèse d'une polybenzoxazine (homopolymère) particulière (Polymère noté P-5) convenant au renfort de l'invention, à partir de la seule benzoxazine halogénée particulière de formule (A-11) (Monomère M-11), ainsi que la structure de ce polymère une fois ses cycles oxazine ouverts (Polymère noté P-5') (Fig. 18) ;
- le schéma de synthèse, à partir de phénol bromé (composé 1), p-formaldéhyde (composé 3) et d'une autre diamine spécifique aliphatique (composé 4), d'une dibenzoxazine bromée particulière de formule (A-12) (Monomère noté M-12) utilisable pour la synthèse de polybenzoxazines (Polymère P-6 et P-6' de la figure 20) convenant au renfort de l'invention (Fig. 19) ;
- le schéma de synthèse d'une polybenzoxazine (homopolymère) particulière (Polymère noté P-6) convenant au renfort de l'invention, à partir de la seule benzoxazine halogénée particulière de formule (A-12) (Monomère M-12), ainsi que la structure de ce polymère une fois ses cycles oxazine ouverts (Polymère noté P-6') (Fig. 20) ;
- un autre schéma possible d'obtention du Polymère P-6 précédent, par synthèse directe (à partir des composés 3, 4 et 5) c'est-à-dire sans passer par le Monomère M-12 précédent (Fig. 21) ;
- le schéma de synthèse d'une polybenzoxazine particulière (Polymère noté P-7) convenant au renfort de l'invention, à partir de la benzoxazine halogénée particulière de formule (A-11) précédente (Monomère M-11) et du monomère particulier de formule (A-12) précédente (Monomère M-12), ainsi que la structure de ce polymère une fois ses cycles oxazine ouverts (Polymère noté P-7') (Fig. 22) ;
- en coupe radiale, un exemple de bandage selon l'invention, incorporant un renfort conforme à l'invention (Fig. 23).

### 4. DESCRIPTION DETAILLEE DE L'INVENTION

Dans la présente demande, sauf indication expresse différente, tous les pourcentages (%) indiqués sont des pourcentages en masse (ou en poids, de manière équivalente).

L'expression « x et/ou y » signifie « x » ou « y » ou les deux (c'est-à-dire « x et y »). Tout intervalle de valeurs désigné par l'expression « entre a et b » représente le domaine de valeurs allant de plus de « a » à moins de « b » (c'est-à-dire bornes « a » et « b » exclues) tandis que tout intervalle de valeurs désigné par l'expression « de a à b » signifie le domaine de valeurs allant de « a » jusqu'à « b » (c'est-à-dire incluant les bornes strictes « a » et « b »).

On rappellera tout d'abord que les benzoxazines sont des composés de formule générale :

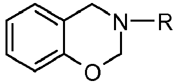

La figure la annexée rappelle le principe général de synthèse d'une benzoxazine, ici à partir (réaction de condensation) d'une molécule de phénol, de deux molécules de formaldéhyde et d'une amine (R désignant le résidu de l'amine), avec élimination de deux molécules d'eau.

La figure 1b rappelle quant à elle le mécanisme d'ouverture (« *ring-opening* ») du cycle oxazine d'un tel composé lors d'un apport thermique (représenté par le symbole Δ).

De nombreux composés ou monomères benzoxazines peuvent être ainsi synthétisés en utilisant divers phénols et amines selon leurs types de substituants. Ces groupes substituants peuvent fournir ensuite des sites polymérisables et permettre la synthèse de divers polymères benzoxazine (ou polybenzoxazines).

Benzoxazines et polybenzoxazines qui en sont issues sont des produits aujourd'hui bien connus de l'homme du métier ; pour ne citer que quelques exemples de publication, on peut mentionner les articles *«* Polybenzoxazines - New high performance thermosetting resins : synthesis and properties » ; N.N. Ghosh et al., Prog. Polym. Sci. 32 (2007), 1344-1391, ou *«* Recent Advancement on Polybenzoxazine - A newly Developed High Performance Thermoset », Y. Yaggi et al., J. Polym. Sci. Part A: Polym. Chem. : Vol. 47 (2009), 5565-5576, ainsi que par exemple les brevets ou demandes de brevet US 5 543 516, WO 2013/148408.

Comme expliqué en détail dans les documents ci-dessus, les polybenzoxazines ont la capacité remarquable, à haute température (par exemple, typiquement supérieure à 150°C voire à 200°C selon leur microstructure particulière), d'ouvrir leur cycles oxazine et de conduire ainsi à des structures de résines polyphénoliques thermodurcissables.

La polybenzoxazine spécifique convenant au renfort de l'invention dérive d'une benzoxazine (dénommée « Monomère M » dans la présente demande) du type halogénée qui répond à la formule générique (A) qui suit, « Hal » représentant un (au moins un, c'est-à-dire un ou plusieurs) halogène :

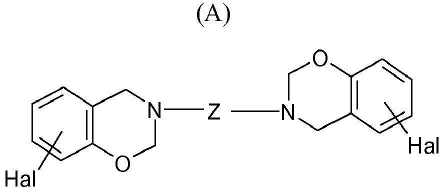

La figure 2 en donne le schéma de synthèse général, sous apport thermique (Δ) et avec élimination d'eau, à partir d'un phénol halogéné, de p-formaldéhyde et d'une diamine.

Dans la formule (A) ci-dessus, Z (comme Z₁ et Z₂ décrits plus loin) représente un groupement de liaison (espaceur ou *« spacer »*) au moins divalent c'est-à-dire qu'il pourrait comporter plus de deux liaisons covalentes, par exemple trois ou quatre liaisons covalentes. De préférence, Z (comme Z₁ et Z₂ décrits plus loin) est divalent, c'est-à-dire ne comporte que deux liaisons covalentes.

Z (comme Z₁ et Z₂ décrits plus loin) peut être aliphatique, cycloaliphatique ou aromatique. Ce groupement, pouvant être éthyléniquement saturé ou insaturé, comporte par définition au moins un (c'est-à-dire un ou plusieurs) atome de carbone, et optionnellement au moins un (c'est-à-dire un ou plusieurs) hétéroatome choisi parmi O (oxygène), S (soufre), N (azote) et P (phosphore).

Selon un mode de réalisation préférentiel de l'invention, Z (comme Z₁ et/ou Z₂ décrits plus loin) représente un groupement aliphatique comportant 1 à 20, plus préférentiellement 1 à 16, en particulier 1 à 12 atomes de carbone, ou bien un groupement cycloaliphatique comportant 3 à 20, plus préférentiellement 3 à 16, en particulier 3 à 12 atomes de carbone. Plus préférentiellement encore, Z (comme Z₁ et/ou Z₂ décrits plus loin) représente un groupement alkylène comportant 1 à 20 atomes, de préférence 1 à 16, en particulier 1 à 12 atomes de carbone.

Plus préférentiellement, Z (comme Z₁ et/ou Z₂ décrits plus loin) comporte un groupement choisi parmi -(CH₂)ₓ-, -CH₂-Ph-CH₂-, -(CH₂-CH₂-X)ₙ- et -(CH(CH₃)-CH₂-X)ₙ-, « x » et « n » étant des entiers de 1 à 20, en particulier de 1 à 16, plus particulièrement de 1 à 12, Ph représentant le noyau benzénique, et X représentant au moins un (c'est-à-dire un ou plusieurs) hétéroatome choisi parmi O (oxygène), S (soufre), N (azote) et P (phosphore).

Chaque noyau benzénique du Monomère M est porteur d'au moins un (c'est-à-dire un ou plusieurs) halogène. En outre, dans ce monomère de formule (A), un ou plusieurs atomes d'hydrogène d'au moins un ou de chaque noyau benzénique peuvent être substitués (ou non) par différents substituants, par exemple par des groupes fonctionnels susceptibles de favoriser l'adhésion du polymère au métal et/ou au caoutchouc.

De préférence, chaque noyau benzénique du monomère M est porteur d'un seul halogène (Hal) ou au maximum de deux, plus préférentiellement d'un et d'un seul halogène, ce dernier étant plus préférentiellement situé en position para de l'oxygène du cycle oxazine.

Selon un mode de réalisation particulièrement préférentiel, combinable à chacun des autres modes de réalisation de l'invention, Hal représente le brome.

La figure 3 illustre un schéma de synthèse possible, à partir d'une diamine spécifique du type aliphatique (polyéthylène diamine), d'une benzoxazine halogénée particulière de formule (A-1), cette benzoxazine étant utilisable comme monomère (Monomère noté M-1) pour la synthèse ultérieure d'une polybenzoxazine convenant au renfort de l'invention. On note que Z représente ici un groupement méthylène -(CH₂)ₓ- dans lequel le symbole « x » représente un nombre entier variant de préférence de 1 à 20, plus préférentiellement de 1 à 16, en particulier de 1 à 12. Une telle synthèse sera exemplifiée plus tard pour l'obtention d'un monomère spécifique (Monomère M-10 ; Fig. 15 et Fig. 16).

Selon un autre mode de réalisation préférentiel, Z (comme Z₁ et/ou Z₂ décrits plus loin) représente un groupement aromatique comportant 6 à 30, plus préférentiellement 6 à 20 atomes de carbone. Ainsi, la figure 4 illustre un autre schéma de synthèse possible, cette fois à partir d'une diamine spécifique du type aromatique (p-xylylène diamine), d'un autre exemple de benzoxazine halogénée particulière de formule (A-2), utilisable comme monomère (Monomère noté M-2) pour la synthèse ultérieure d'une autre polybenzoxazine convenant au renfort de l'invention.

Les figures 5, 6 et 7 illustrent trois autres schémas de synthèse possibles, toujours à partir de phénol halogéné et de paraformaldéhyde d'une part, et d'autre part de différentes diamines spécifiques, toutes du type aliphatiques, d'autres exemples de benzoxazines particulières de formules respectives (A-3), (A-4) et (A-5), utilisables comme monomères (Monomères respectivement notés M-3, M-4 et M-5) pour la synthèse de polybenzoxazines convenant au renfort de l'invention.

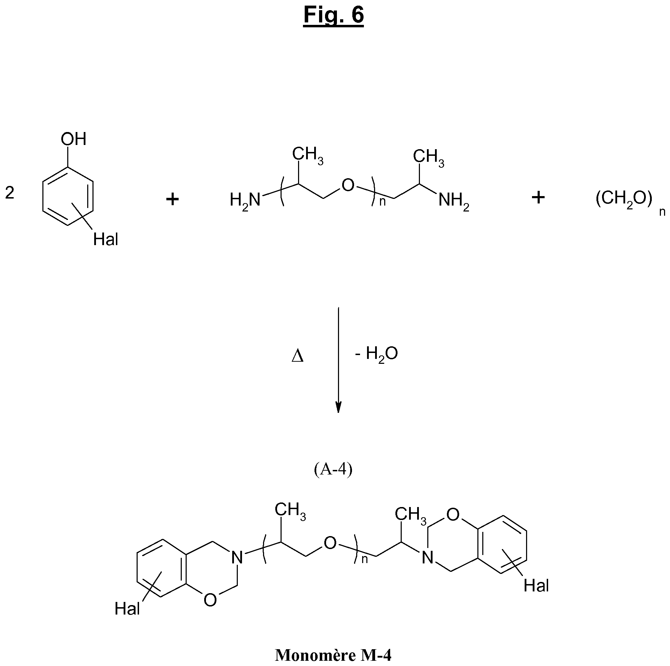

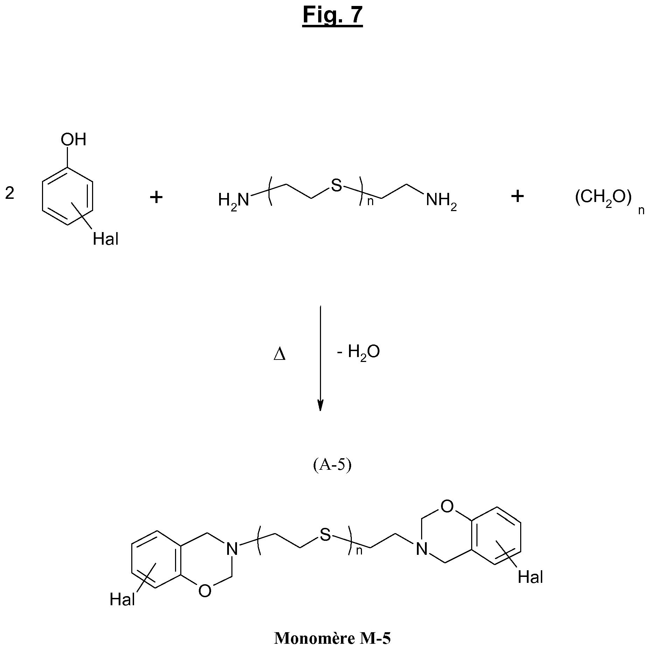

A la figure 5, la répétition des motifs [-CH₂-CH₂-O-] (polyéthylène oxyde) sur le groupement de liaison Z est susceptible de conduire à des polybenzoxazines de haute cristallinité, tandis qu'à la figure 6, la présence des groupes méthyle (polypropylène oxyde) sur Z permet de diminuer la réactivité des deux groupements terminaux amine et de conduire à des polybenzoxazines de moindre cristallinité. A la figure 7, la présence sur le spacer Z de l'atome (hétéroatome) de soufre dans les motifs récurrents [-CH₂-CH₂-S-] (polyéthylène thioéther), est susceptible d'améliorer encore l'adhésion au métal de la polybenzoxazine. Ainsi, on peut voir que la structure du groupement Z (comme Z₁ et Z₂ décrits plus loin) du monomère benzoxazine peut être modifiée largement dans le but de moduler les propriétés du polymère final. Ceci constitue un avantage majeur de la présente invention.

La figure 8 illustre un autre schéma de synthèse possible, à partir d'un phénol halogéné, de paraformaldéhyde et d'une polyamine aliphatique spécifique consistant cette fois en une triamine (tris (3-aminopropyl) amine), d'un autre exemple de composé (tri)benzoxazine halogénée particulière de formule (A-6) utilisable comme monomère (Monomère noté M-6) pour la synthèse d'une autre polybenzoxazine convenant au renfort de l'invention.

La polybenzoxazine convenant au renfort de l'invention (Polymère « P ») a donc pour caractéristique essentielle de comporter des unités structurelles récurrentes comportent au moins un motif répondant aux formule (I) (avant ouverture des cycles oxazine) ou formule (II) (après ouverture des cycles) ci-dessous : 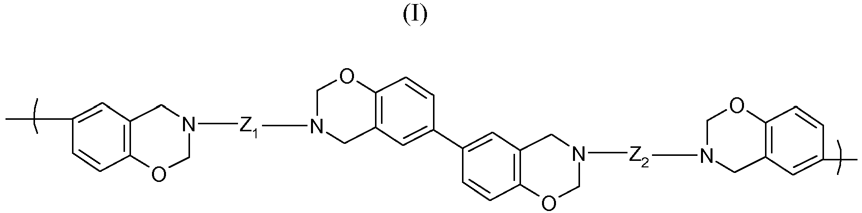 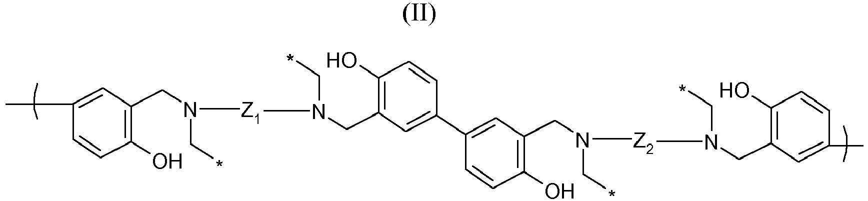 dans lesquelles Z₁ et Z₂, identiques ou différents, représentent un groupement de liaison (spacer) au moins divalent, aliphatique, cycloaliphatique ou aromatique, comportant au moins un atome de carbone et optionnellement au moins un hétéroatome choisi parmi O, S, N et P.

Par polymère doit être entendu ici tout homopolymère ou copolymère, notamment copolymère à blocs, avec des unités structurelles récurrentes comportent au moins un motif de formule (I) ou (II) ci-dessus ; le polymère de l'invention peut bien entendu comporter à la fois des motifs de formule (I) et des motifs de formule (II).

Dans la formule (II) ci-dessus, l'homme du métier comprendra immédiatement que les symboles « * » (identiques ou différents) représentent un rattachement quelconque du motif à un atome de carbone ou à un hétéroatome (choisi de préférence parmi O, S, N et P), rattachement ou liaison résultant de l'ouverture des cycles oxazine.

On comprendra bien entendu que Z₁ et Z₂ ont les définitions principales et les définitions préférentielles déjà détaillées précédemment pour Z dans le composé (monomère) benzoxazine.

Ainsi, selon un mode de réalisation préférentiel, Z₁ et/ou Z₂, identiques ou différents, représentent un groupement aliphatique comportant 1 à 20, de préférence 1 à 16 atomes de carbone, ou un groupement cycloaliphatique comportant 3 à 20, de préférence 3 à 16 atomes de carbone, et optionnellement au moins un hétéroatome choisi parmi O, S, N et P.

Plus préférentiellement, Z₁ et/ou Z₂, identiques ou différents, représentent un groupement alkylène comportant 1 à 20, de préférence 1 à 16, en particulier de 1 à 12 atomes de carbone, et optionnellement au moins un hétéroatome choisi parmi O, S, N et P.

Selon un autre mode de réalisation préférentiel, Z₁ et/ou Z₂, identiques ou différents, représentent un groupement aromatique comportant 6 à 30, de préférence 6 à 20 atomes de carbone, et optionnellement au moins un hétéroatome choisi parmi O, S, N et P.

Selon un autre mode de réalisation préférentiel, Z₁ et/ou Z₂ comportent au moins un groupement choisi parmi -(CH₂)ₓ-, -CH₂-Ph-CH₂-, -(CH₂-CH₂-X)ₙ- et -(CH(CH₃)-CH₂-X)ₙ-, « x » et « n » étant des entiers de 1 à 20, en particulier de 1 à 16, plus particulièrement de 1 à 12 (« x » étant noté plus précisément « x₁ » dans le cas de Z₁ et « x₂ » dans le cas de Z₂), Ph représentant le noyau benzénique, et X représentant au moins un (c'est-à-dire un ou plusieurs) hétéroatome choisi parmi O (oxygène), S (soufre), N (azote) et P (phosphore).

La figure 9 représente un schéma général de synthèse, par polycondensation, d'une polybenzoxazine (Polymère P) destinée au renfort de l'invention, à partir de la benzoxazine halogénée de formule (A) de la Fig. 2 (Monomère M) et d'un autre monomère (Monomère M'), de formule générique notée (A') très voisine qui peut se distinguer notamment par la nature de son spacer (Z₂) et/ou de son halogène (Hal).

La polybenzoxazine « P » de la figure 9, plus exactement au moins une partie de ses unités récurrentes, a été également représentée à la figure 13, avant (Polymère P) et après (Polymère P') ouverture de ses cycles oxazine.

La figure 10 représente un schéma de synthèse particulier d'une telle polybenzoxazine préférentielle destinée au renfort de l'invention (Polymère noté P-1) de formule (1-1), à partir d'une benzoxazine halogénée particulière (Monomère M-7) de formule (A-7) et d'une autre benzoxazine halogénée particulière (Monomère M-7') de la formule (A-7') très voisine qui peut se distinguer notamment par la valeur de l'entier « x » (respectivement « x₁ » et « x₂ » pour Z₁ et Z₂) .

Dans cet exemple, on note en particulier que, selon un mode de réalisation préférentiel de l'invention déjà décrit, chaque noyau benzénique des monomères M-7 et M-7' est porteur d'un et un seul halogène (Hal), plus préférentiellement du brome, cet halogène étant plus particulièrement situé en position para de l'oxygène du cycle oxazine.

Cette polybenzoxazine de la figure 10, ou plus exactement au moins une partie de ses unités récurrentes, a également été représentée à la figure 14, avant (Polymère P-1) et après (Polymère P-1') ouverture de ses cycles oxazine suite à un apport thermique suffisant.

La figure 11 représente un autre schéma de synthèse particulière d'une autre polybenzoxazine spécifique (Polymère noté P-2) destinée au renfort de l'invention, de formule (1-2), à partir de la benzoxazine halogénée spécifique (Monomère M-7) précédente et d'une autre benzoxazine spécifique (Monomère M-8) de formule (A-8), du type aromatique pour ce qui concerne le spacer Z₂.

La figure 12 représente un autre schéma de synthèse particulière d'une autre polybenzoxazine spécifique (Polymère noté P-3) convenant au renfort de l'invention, de formule (1-3), à partir de la benzoxazine halogénée spécifique (Monomère M-7) précédente et d'une autre benzoxazine spécifique de formule (A-9) (Monomère M-9) du type aliphatique (avec hétéroatome O) pour ce qui concerne le spacer Z₂.

Dans ces exemples des figures 11 et 12, comme pour la figure 10 précédente, on note en particulier que, selon un mode de réalisation préférentiel de l'invention déjà indiqué, chaque noyau benzénique des monomères benzoxazine est porteur d'un et un seul halogène (Hal), plus préférentiellement du brome, situé plus particulièrement en position para de l'oxygène du cycle oxazine.

Comme déjà indiqué, les figures 13 et 14 représentent également les polybenzoxazines convenant au renfort de l'invention (ici respectivement notées P' et P-1') des Fig. 9 et Fig. 10, une fois leurs cycles oxazine ouverts après apport thermique.

Les figures 15 et 16 représentent le schéma de synthèse, à partir de phénol bromé (composé 1), p-formaldéhyde (composé 3) et d'une diamine spécifique aliphatique (composé 2), d'une dibenzoxazine bromée particulière de formule (A-10) (Monomère noté M-10) utilisable pour la synthèse de polybenzoxazines (Polymère P-4 et P-4' de la figure 17) convenant au renfort de l'invention, ainsi que le spectre RMN ¹H (500 MHz) du Monomère M-10 dissous dans CD₂Cl₂. Ces figures seront commentées en détail ultérieurement.

Les figures 17 et 18 représentent deux autres schémas de synthèse possibles de polybenzoxazines spécifiques (Polymères notés respectivement P-4 et P-5, de formules respectives (I-4) et (I-5) destinées au renfort de l'invention, à partir d'une seule benzoxazine bromée (homopolymérisation respectivement des Monomères M-10 et M-11 de formules respectives (A-10) et (A-11)), sous apport thermique (Δ), ainsi que ces mêmes polymères une fois leurs cycles oxazine ouverts (Polymère P-4' et P-5').

La figure 19 représente le schéma de synthèse, à partir de phénol bromé (composé 1), p-formaldéhyde (composé 3) et d'une autre diamine spécifique aliphatique (composé 4), d'une dibenzoxazine bromée particulière de formule (A-12) (Monomère noté M-12) utilisable pour la synthèse de polybenzoxazines (Polymère P-6 et P-6' de la figure 20 qui suit) destinées au renfort de l'invention.

La figure 20 représente le schéma de synthèse d'une autre polybenzoxazine particulière (Polymère noté P-6) convenant au renfort de l'invention, à partir de la seule benzoxazine halogénée particulière de formule (A-12) (Monomère M-12), ainsi que la structure de ce polymère une fois ses cycles oxazine ouverts (Polymère noté P-6').

Un autre schéma d'obtention du Polymère P-6 ci-dessus est représenté à la figure 21, cette fois par synthèse directe (à partir des composés 3, 4 et 5) c'est-à-dire sans passer par le Monomère M-12 précédent (Fig. 21) ; cette figure sera commentée en détail ultérieurement.

La figure 22 représente un autre exemple de schéma de synthèse (copolymérisation) d'une autre polybenzoxazine particulière (Polymère noté P-7) destinée au renfort de l'invention, à partir de la benzoxazine bromée de formule (A-11) précédente (Monomère M-11) et de la benzoxazine elle aussi bromée de formule (A-12) précédente (Monomère M-12), ainsi que la structure de ce polymère une fois ses cycles oxazine ouverts (Polymère noté P-7').

Typiquement, la polybenzoxazine du renfort de l'invention peut comporter de dix à plusieurs centaines, préférentiellement de 50 à 300 unités structurelles à motifs de formule (I) et/ou (II), en particulier d'unités structurelles telles que représentées à titre d'exemples aux figures 10 à 14, 17 et 18, et 20 à 22.

La polybenzoxazine précédemment décrite de l'invention est avantageusement utilisable, à titre de primaire d'adhésion ou comme couche adhésive unique, pour revêtir le renfort de l'invention et faire adhérer ce dernier à du caoutchouc.

Pour faire adhérer le caoutchouc à la couche de polybenzoxazine, on pourra aussi utiliser tout système adhésif connu, par exemple une colle textile conventionnelle du type RFL comportant au moins un élastomère diénique tel que du caoutchouc naturel, ou toute colle équivalente connue pour conférer une adhésion satisfaisante entre du caoutchouc et des polymères conventionnels tels que polyester ou en polyamide, comme par exemple les compositions adhésives décrites dans les demandes de brevet WO 2013/017421, WO 2013/017422, WO 2013/017423, WO 2015/007641, WO 2015/007642.

Avant l'encollage ci-dessus, il pourra être avantageux d'activer la surface de couche de polybenzoxazine, par exemple par voie physique et/ou chimique, pour améliorer sa prise de colle et/ou son adhésion finale au caoutchouc. Un traitement physique pourra consister par exemple en un traitement par un rayonnement tel qu'un faisceau d'électrons, ou par plasma ; un traitement chimique pourra par exemple consister en un passage préalable dans un bain de résine époxy et/ou de composé isocyanate.

L'homme du métier comprendra aisément que la connexion entre le renfort métallique pourvu de sa couche de polybenzoxazine et la couche de caoutchouc avec laquelle il est au contact, sera assurée définitivement lors de la cuisson (réticulation) finale de l'article en caoutchouc concerné.

La polybenzoxazine précédemment décrite est utilisable tout particulièrement sur tout type de renfort métallique, typiquement du type filiforme tel que par exemple un fil, un film (par convention, ayant une largeur supérieure à 5 cm), un ruban (par convention film plus étroit de largeur au plus égale à 5 cm) ou un câble en acier, notamment en acier au carbone, destiné en particulier à renforcer une matrice de caoutchouc insaturé tel que du caoutchouc naturel.

L'acier, notamment acier au carbone, peut être un acier clair, c'est-à-dire non revêtu, ou bien revêtu au moins en partie d'au moins une couche (donc couche intermédiaire, disposée entre acier et couche polybenzoxazine) d'un second métal dit métal de surface, ce métal de surface étant préférentiellement choisi dans le groupe constitué par aluminium, cuivre, zinc et les alliages d'au moins un de ces métaux avec au moins un autre métal (appartenant à ce groupe ou pas). A titre d'exemple plus préférentiel, le métal de surface est du laiton.

L'acier au carbone est préférentiellement tel qu'utilisé habituellement dans les câbles type *"*S*teel cords"* pour bandages pour véhicules automobiles ; mais il est bien entendu possible d'utiliser d'autres aciers, par exemple des aciers inoxydables. Lorsqu'un acier au carbone est utilisé, sa teneur en carbone est de préférence comprise entre 0,4% et 1,2%, notamment entre 0,5% et 1,1%. L'invention s'applique en particulier à tout acier du type *Steel cord* à résistance standard (dit "NT" pour "*Normal Tensile*"), à haute résistance (dit "HT" pour *"High Tensile*"), à très haute résistance (dit "SHT" pour "*Super High Tensile*") comme à ultra-haute résistance (dit "UHT" pour *"Ultra High Tensile"*).

L'invention concerne également tout article en caoutchouc, à l'état cru (c'est-à-dire non réticulé) ou cuit (à l'état réticulé), en particulier tout bandage pneumatique ou non pneumatique pour véhicule automobile, comportant un renfort selon l'invention. Ce bandage de l'invention peut être destiné à tous types de véhicules automobiles, en particulier de véhicules tourisme ou véhicules industriels tels que Poids-lourd, Génie civil, autres véhicules utilitaires de transport ou de manutention.

A titre d'exemple, la figure 23 représente de manière très schématique (sans respect d'une échelle spécifique), une coupe radiale d'un bandage conforme à l'invention, par exemple pour véhicule automobile du type tourisme ou pour véhicule Poids-lourd.

Ce bandage 1 comporte un sommet 2 renforcé par une armature de sommet ou ceinture 6, deux flancs 3 et deux bourrelets 4, chacun de ces bourrelets 4 étant renforcé avec une tringle 5. Le sommet 2 est surmonté d'une bande de roulement non représentée sur cette figure schématique. Une armature de carcasse 7 est enroulée autour des deux tringles 5 dans chaque bourrelet 4, le retournement 8 de cette armature 7 étant par exemple disposé vers l'extérieur du bandage 1 qui est ici représenté monté sur sa jante 9.

L'armature de carcasse 7 est de manière connue en soi constituée par exemple d'au moins une nappe de caoutchouc renforcée par des renforts dits "radiaux", c'est-à-dire que ces renforts sont disposés pratiquement parallèles les uns aux autres et s'étendent d'un bourrelet à l'autre de manière à former un angle compris entre 80° et 90° avec le plan circonférentiel médian (plan perpendiculaire à l'axe de rotation du pneumatique qui est situé à mi-distance des deux bourrelets 4 et passe par le milieu de l'armature de sommet 6).

La ceinture 6 est par exemple constituée, également de manière connue en soi, par au moins deux nappes de caoutchouc dites "nappes de travail" ou "nappes de triangulation", superposées et croisées, renforcées de renforts métalliques disposés sensiblement parallèlement les uns par rapport aux autres et inclinés par rapport au plan circonférentiel médian, ces nappes de travail pouvant être associées ou non à d'autres nappes et/ou tissus de caoutchouc. Ces nappes de travail ont pour fonction première de donner au bandage pneumatique une rigidité de dérive élevée. La ceinture 6 peut comporter par exemple une nappe de caoutchouc dite "nappe de frettage" renforcée par des fils de renforcement dits "circonférentiels", c'est-à-dire que ces fils de renforcement sont disposés pratiquement parallèles les uns aux autres et s'étendent sensiblement circonférentiellement autour du bandage pneumatique de manière à former un angle préférentiellement compris dans un domaine de 0 à 10° avec le plan circonférentiel médian. Ces fils de renforcement circonférentiels ont pour fonction première, on le rappelle, de résister à la centrifugation du sommet à haute vitesse.

Le bandage 1 de l'invention a par exemple pour caractéristique essentielle qu'au moins sa ceinture (6) et/ou son armature de carcasse (7) comporte un renfort conforme à l'invention. Selon un autre exemple de réalisation possible de l'invention, c'est la zone bourrelet qui peut être renforcée d'un tel renfort ; ce sont par exemple les tringles (5) qui pourraient être constituées, en tout ou partie, d'un tel renfort selon l'invention.

### 5. EXEMPLES DE REALISATION DE L'INVENTION

Les essais qui suivent décrivent en détail des exemples de synthèse de composés benzoxazine (Monomères M-10 et M-12) et de polybenzoxazines (Polymères P-4 et P-6) destinées au renfort selon l'invention. Enfin, des tests d'adhésion sont conduits pour illustrer l'excellente performance adhésive des renforts selon l'invention.

De manière générale, avant toute synthèse (monomère ou polymère), l'appareillage utilisé est séché sous vide (50 mbar) à au moins 100°C (pistolet à air chaud) pendant au moins 5 min, puis refroidi à température ambiante (20°C) et mis en continu sous courant de gaz inerte (azote). Tous les produits utilisés sont initialement pesés et manipulés sous atmosphère d'argon dans une boîte à gants, puis transférés sous courant d'argon dans le ballon de réaction.

### 5.1. Synthèse d'un composé benzoxazine halogéné (Monomère M-10)

La synthèse est réalisée selon le mode opératoire schématisé à la figure 15, comme expliqué en détail ci-après, à partir de trois composés : un phénol halogéné (composé 1 ; 4-bromophénol ; produit Aldrich « B75808 »), une diamine aliphatique (composé 2; 1,8-diaminooctane ; produit Aldrich « D22401 ») et un p-formaldéhyde (composé 3 ; produit Aldrich « 158127 »), en présence de deux solvants (toluène et éthanol anhydres).

On dispose pour cette synthèse d'un ballon rond à trois cols de 250 ml, équipé d'un thermomètre, d'une entrée d'azote, d'un agitateur magnétique et d'un réfrigérant. On verse dans le ballon le composé 1 (2 eq ; 10,38 g soit 60 mmol) puis de l'éthanol (51 ml). La présence d'éthanol est ici importante, empêchant la formation de produit intermédiaire du type triazine, instable. Sous agitation, on introduit ensuite le composé 2 (1 eq ; 4,32 g soit 30 mmol), le composé 3 (4 eq ; 3,60 g soit 120 mmol) et enfin le toluène (102 ml). Le milieu réactionnel est chauffé (environ 75°C) à reflux pendant 72 h, puis placé sous évaporateur rotatif, à 50°C sous vide (50 mbar), pour évaporation des solvants. On obtient ainsi une huile de couleur jaune citron.

Cette huile subit ensuite une première purification sur une colonne SiO₂, à l'aide d'un éluant diéthyléther/cyclohexane, selon un rapport volumique des deux solvants variant de 10:35 (initial) à 10:20 (final). Les fractions purifiées contenant le monomère (M-10) sont réunies et les solvants évaporés. On obtient ainsi un solide jaune clair. Ce dernier est placé dans du méthanol (1 g pour 80 ml) et on chauffe à reflux (65°C) pendant 30 min. Puis on laisse la solution refroidir à température ambiante (environ 20°C) pour cristallisation du monomère. Le produit solide obtenu est isolé par filtration (filtre Büchner). On obtient ainsi des cristaux de couleur blanche, qui sont séchés à l'étuve sous vide à 50°C, durant toute une nuit, pour élimination de toute trace de solvant (rendement de réaction d'environ 60%).

La figure 16 annexée reproduit le spectre RMN ¹H (500 MHz) du Monomère M-10 ainsi synthétisé, dissous dans CD₂Cl₂. Cette analyse RMN donne les résultats suivants :
*¹H MMR (500 MHz) CD₂Cl₂* : *1.29 (m, 8H); 1.51 (m, 4H); 2.67 (m, 4H); 3.92 (s, 4H); 4.82 (s, 4 H); 6.62* - *6.64 (d, 2H); 7.08 (s, 2H); 7.17* - *7.19 (d, 2H).*

### 5.2. Synthèse d'une polybenzoxazine (Polymère P-4)

Cette synthèse est réalisée selon le mode opératoire schématisé à la figure 17, comme décrit en détail ci-après, à partir du seul monomère benzoxazine obtenu à l'étape précédente (Monomère M-10) ; ceci en présence de 2,2'-bipyridyl (produit Sigma Aldrich «D216305 »); 1,5-cyclooctadiène (Sigma Aldrich « 246050 »); bis(1,5-cyclooctadiene nickel(0), Ni(COD)₂ (Sigma Aldrich « 244988 »); solvants anhydres : toluène (Sigma Aldrich « 179418 » ) et N,N-diméthylformamide (DMF, produit Acros ref. « 348431000 »). Le monomère M-10 a été préalablement séché sous vide à 40°C, toute la nuit.

La synthèse est conduite dans un ballon rond à quatre cols de 50 ml, équipé d'une entrée d'azote, d'un thermomètre, d'un agitateur magnétique et un réfrigérant et d'un pont de distillation (pourvu d'une calotte chauffante). On introduit dans le ballon tout d'abord le 2,2'-bipyridyl (61,08 mg soit 0,391 mmol), puis le 1,5-cyclooctadiene (27,8 mg soit 0,257 mmol) et le catalyseur Ni(COD)₂ (103,75 mg soit 0,377 mmol). On ajoute ensuite 15 ml de DMF sous agitation, puis 5 ml de toluène. Le tout est purgé sous N₂ pendant 5 min et le milieu réactionnel est chauffé à 80°C pendant 30 min. Finalement, on ajoute le Monomère M-10 (0,2 g soit 0,377 mmol) de formule (A-10) sous agitation. On laisse le tout réagir à 80°C pendant 72 h. Les produits volatils du mélange réactionnel sont ensuite distillés à 80°C (sous 50 mbar) ; le polymère obtenu est lavé 3 fois dans 20 ml de mélange acétone/méthanol (1:1), isolé par filtration (filtre Büchner), lavé de nouveau avec 20 ml d'eau distillée, enfin séché sous vide à 80°C pendant toute une nuit (environ 12 h).

Le Polymère P-4 de la Fig. 17 a été ainsi obtenu, comme attesté par l'analyse ATR FTIR *(Attenuated Total Reflection ; Fourrier Transform Infrared Spectroscopy),* qui a révélé des transitions typiques aux fréquences suivantes [en cm⁻¹] :
*2847.6; 1609.9; 1483.8; 1435.9; 1220.2; 1114.8; 1018.0; 926.3; 813.5; 438.7.*

Pour être complet, on a observé qu'une telle polymérisation du Monomère M-10 en Polymère P-4 s'accompagnait de la disparition complète, par rapport au spectre correspondant du Monomère M-10, des pics initialement présents aux fréquences (en cm-¹) de 608.6 ; 740.8 ; 850.5 et 1170.1, tandis que les pics à 915.5 and 1475.3 étaient déplacés respectivement à 926.3 et 1483.8.

Ce Polymère P-4, sous forme d'une poudre de couleur beige, a été également analysé par DSC *(Differential Scanning Calorimetry)* entre -80°C et +250°C selon une rampe de 10°C/min (appareil DSC « 822-2 » de Mettler Toledo ; atmosphère azote) : l'analyse a révélé, au premier passage entre -80°C et +250°C, une exothermie (correspondant à l'ouverture des cycles oxazine et à la réticulation du polymère) au-delà de 200°C, avec un maximum à environ 230°C. Au cours des deuxième et troisième passages de DSC, toujours conduits entre -80°C et +250°C, aucune transition vitreuse (Tg) n'a été visible, ce qui atteste de la très grande stabilité thermique du polymère destiné au renfort de l'invention.

### 5.3. Synthèse d'un autre composé benzoxazine halogéné (Monomère M-12)

La synthèse est réalisée selon le mode opératoire schématisé à la figure 19 comme expliqué en détail ci-après, à partir de trois composés : un phénol halogéné (composé 1; 4-bromophénol ; produit Aldrich « B75808 »), une diamine polyéther aliphatique (composé 4 ; un poly(propylène glycol)bis(2-aminopropyl) éther (Mn égale à 400; produit Aldrich « 406678 ») et un p-formaldéhyde (composé 3 ; produit Aldrich « 158127 »), en présence de deux solvants (toluène et éthanol anhydres).

Comme précédemment, on dispose pour cette synthèse d'un ballon rond à trois cols de 250 ml, équipé d'un thermomètre, d'une entrée d'azote, d'un agitateur magnétique et d'un réfrigérant. On verse dans le ballon le composé 1 (2 eq ; 10,49 g soit 60 mmol) puis de l'éthanol (51 ml). Sous agitation, on introduit ensuite le composé 4 (1 eq ; 12,62 g soit 30 mmol), le composé 3 (4 eq ; 3,79 g soit 120 mmol) et enfin le toluène (102 ml). Le milieu réactionnel est chauffé à reflux (environ 75°C) pendant 48 h, puis placé sous vide (1 mbar) à 110°C pendant 30 min pour assurer l'évaporation des produits volatils. On obtient ainsi un liquide visqueux de couleur orange. Aucune trace de composé bromophénol libre n'a été détectée par spectroscopie FTIR dans le produit de réaction.

Le spectre RMN ¹H (500 MHz) du Monomère M-12 ainsi synthétisé, dissous dans CD₂Cl₂, a confirmé sa structure chimique, cette analyse RMN donnant les résultats suivants :
*¹H MMR (500 MHz) CD₂Cl₂* : *1.12 (s, 24H); 3.10 (s, 2H); 3.31-3.56 (m, 24H); 4.04 (s, 4H); 4.93 (s, 4 H); 6*.*61* - *6.63 (d, 2H); 7.08 (s, 2H); 7.17* - *7.18 (d, 2H).*

### 5.4. Synthèse d'une autre polybenzoxazine (Polymère P-6)

Cette synthèse est réalisée selon le mode opératoire schématisé à la figure 20, comme décrit en détail ci-après, à partir du seul monomère benzoxazine (Monomère M-12) obtenu à l'étape précédente, ceci en présence de 2,2'- bipyridyl (produit Sigma Aldrich « D216305 ») ; 1,5-cyclooctadiène (Sigma Aldrich « 246050 »); bis(1,5-cyclooctadiène nickel(0), Ni(COD)₂ (Sigma Aldrich « 244988 ») ; solvants anhydres toluène (Sigma Aldrich « 179418 ») etN,N-Diméthylformamide (DMF, produit Acros Organics « 348431000 »). Le monomère M-12 avait été préalablement séché sous vide à 60°C durant toute la nuit (environ 12 h).

La synthèse est conduite dans un ballon rond à quatre cols de 50 ml, équipé d'une entrée d'azote, d'un thermomètre, d'un agitateur magnétique, d'un réfrigérant et d'un pont de distillation (pourvu d'une calotte chauffante). On introduit dans le ballon tout d'abord le composé 2,2'-bipyridyl (610,8 mg soit 3,91 mmol), puis le 1,5-cyclooctadiène (278 mg soit 2,57 mmol) et le catalyseur Ni(COD)₂ (1,04 g soit 3,77 mmol), tous ces produits étant transférés sous courant d'argon dans le ballon de réaction. On ajoute ensuite 150 ml de DMF sous agitation, puis 50 ml de toluène. Le tout est purgé sous N₂ pendant 5 min et le milieu réactionnel chauffé à 80°C (30 min). Finalement, on ajoute le Monomère M-12 (3,07 g soit 3,77 mmol) de formule (A-12) sous agitation. On laisse le tout réagir à cette température pendant 72 h.

Les produits volatils du mélange réactionnel sont ensuite distillés à 80°C (sous 50 mbar) ; le polymère obtenu est lavé 3 fois dans 20 ml de mélange acétone/méthanol (1:1), isolé par filtration (filtre Büchner), enfin séché sous vide à 60°C pendant toute une nuit (environ 12 h).

Le spectre RMN ¹H (500 MHz) du Polymère P-6 ainsi synthétisé, dissous dans CD₂Cl₂, a confirmé sa structure chimique, cette analyse RMN donnant les résultats suivants :
*¹H MMR (500 MHz) CD₂Cl₂* : *1.08 (m, 18H); 3.36 (s, 2H); 3*.*41*-*3*.*56 (m, 24H); 4.09 (s, 4H); 4.95 (s, 4 H); 6.74* - *6.76 (d, 2H); 7*.*12 (s, 2H); 7*.*23* - *7.24 (d, 2H).*

### 5.5. Autre exemple de synthèse du Polymère P-6

Lors d'un essai complémentaire, le polymère P-6 précédent a été obtenu par un procédé de synthèse directe, sans passer cette fois par le Monomère M-12.

La synthèse est réalisée selon le mode opératoire schématisé à la figure 21, comme expliqué en détail ci-après, à partir de trois composés : un diphénol aromatique (composé 5 ; 4,4'-dihydroxybiphényl ; produit Aldrich « 168734 »), un poly(propylène glycol)-bis(2-aminopropyl)éther (composé 4) et le p-formaldéhyde (composé 3; produit Aldrich « 158127 »), en présence de deux solvants (toluène et éthanol anhydres). On dispose pour cette synthèse d'un ballon rond à trois cols de 250 ml, équipé d'un thermomètre, d'une entrée d'azote, d'un agitateur magnétique et d'un réfrigérant. On verse dans le ballon le composé 5 (1 eq ; 3,84 g soit 20 mmol) puis de l'éthanol (34 ml). Sous agitation, on introduit ensuite le composé 4 (1 eq ; 8,41 g soit 20 mmol), le composé 3 (4 eq ; 2,40 g soit 80 mmol) et enfin le toluène (68 ml). Le milieu réactionnel est chauffé (environ 75°C) à reflux pendant 24 h, puis placé sous évaporateur rotatif, à 50°C sous vide (50 mbar), pour évaporation des solvants. On obtient ainsi une huile visqueuse de couleur jaune citron.

Le spectre RMN ¹H (500 MHz) du Polymère P-6 ainsi synthétisé, dissous dans CD₂Cl₂, a confirmé sa structure chimique, cette analyse RMN donnant les résultats suivants :
*¹H MMR (500 MHz) CD₂Cl₂* : *1.09 (m, 18H); 3.36* (s, *2H); 3*.*41*-*3*.*56 (m, 24H); 4.09 (s, 4H); 4.94 (s, 4 H); 6.74* - *6.75 (d, 2H); 7.12 (s, 2H); 7.23* - *7.24 (d, 2H).*

### 5.6. Test d'adhésion dans un composite métal / caoutchouc

Une partie (650 mg) du Polymère P-6 précédemment préparé a été dissoute dans 8 ml de toluène, ceci pour former une solution transparente légèrement jaune dont une fraction (0,7 ml) a été ensuite déposée de manière uniforme sur un ruban (film) en laiton de dimensions 10 cm x 2,5 cm et d'épaisseur 0,3 mm. L'ensemble a été placé à l'étuve à 175°C (ventilation à l'air) durant 5 min sous vide (50 mbar) (passage au jaune vif), puis 2,5 min supplémentaires à 230°C sous air afin d'ouvrir au moins en partie (c'est-à-dire totalement ou partiellement) les cycles oxazine du polymère, cette dernière étape s'accompagnant d'un changement prononcé de couleur du polymère, passant du jaune vif à une couleur marron. Après refroidissement à température ambiante, le ruban pourvu en surface de sa fine couche (épaisseur 5 à 10 µm) de polybenzoxazine ainsi formée, a été ensuite revêtu au pinceau d'une composition aqueuse de colle RFL (environ 81% en poids d'eau) à base de résorcinol (environ 2%), formol (environ 1%) et d'un latex de caoutchouc (environ 16% de caoutchoucs NR, SBR et VP-SBR). Il a été séché 30 s à 80°C pour éliminer l'eau, puis traité au four pendant 2,5 min à 230°C.

Le ruban en laiton ainsi revêtu du film de polybenzoxazine puis encollé, a été ensuite placé entre deux couches de composition de caoutchouc conventionnelle pour armature de ceinture de bandage pour véhicule tourisme, composition à base de caoutchouc naturel, de noir de carbone et silice à titre de charge, et d'un système de vulcanisation (soufre et accélérateur sulfénamide) ; cette composition étant dépourvue de sel de cobalt. Puis l'éprouvette de composite métal / caoutchouc ainsi préparée a été placée sous presse et le tout cuit (vulcanisé) à 165°C pendant 15 min sous une pression de 20 bar. Après vulcanisation du caoutchouc, on a obtenu un excellent collage entre la matrice de caoutchouc et le ruban métallique malgré l'absence de sel de cobalt dans la matrice de caoutchouc : lors de tests de pelage (à 20°C), on a constaté en effet que la rupture se produisait systématiquement dans la matrice de caoutchouc elle-même et non à l'interphase entre métal et caoutchouc. D'autres essais de collage ont été conduits sur un ruban en acier clair (non revêtu) ; ils ont révélé eux aussi une excellente adhésion au caoutchouc (rupture systématique dans la matrice de caoutchouc).

En conclusion, la polybenzoxazine spécifique décrite en détail dans la présente demande offre aux renforts de l'invention l'avantage majeur de pouvoir ensuite être collés à des matrices de caoutchouc en utilisant de simples colles textiles telles que des colles RFL, ou encore directement (c'est-à-dire sans emploi de telles colles) à ces matrices de caoutchouc, par exemple lorsque ces dernières contiennent des élastomères insaturés fonctionnalisés appropriés tels que des élastomères époxydés. Ainsi, peuvent être utilisés des substrats métalliques revêtus ou non de couches métalliques adhésives telles que du laiton, ainsi que des matrices de caoutchouc environnantes dépourvues de sels métalliques, en particulier de sels de cobalt.

En outre, ceci constituant un avantage notable comparativement aux autres polymères connus décrits en introduction du présent mémoire, les polybenzoxazines convenant aux renforts de l'invention ont la capacité remarquable, à haute température, d'ouvrir leurs cycles oxazine et de conduire ainsi à une structure de résine polyphénolique thermodurcissable. Ceci leur confère une meilleure stabilité thermique, sans transition de phase visible à des températures supérieures à 200°C. Leur microstructure spécifique permet enfin, très avantageusement, d'ajuster la flexibilité de la molécule selon les applications particulières visées.

## Revendications

1. Renfort métallique ou métallisé, dont au moins la surface est au moins en partie métallique, au moins ladite partie métallique étant revêtue d'une polybenzoxazine dont les unités récurrentes comportent au moins un motif répondant aux formules (I) ou (II) : 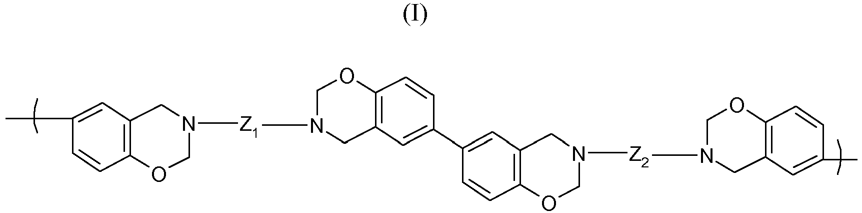 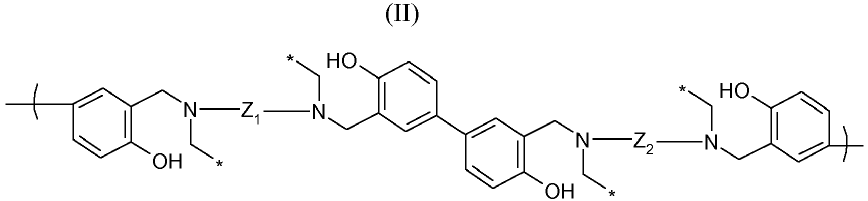 dans lesquelles Z₁ et Z₂, identiques ou différents, représentent un groupement de liaison au moins divalent, aliphatique, cycloaliphatique ou aromatique, comportant au moins un atome de carbone et optionnellement au moins un hétéroatome choisi parmi O, S, N et P.

2. Renfort selon la revendication 1, dans lequel Z₁ et/ou Z₂, identiques ou différents, représentent un groupement aliphatique comportant 1 à 20, de préférence 1 à 16 atomes de carbone, ou un groupement cycloaliphatique comportant 3 à 20, de préférence 3 à 16 atomes de carbone, et optionnellement au moins un hétéroatome choisi parmi O, S, N et P.

3. Renfort selon la revendication 2, dans lequel Z₁ et/ou Z₂, identiques ou différents, représentent un groupement alkylène comportant 1 à 20, de préférence 1 à 16 atomes de carbone, et optionnellement au moins un hétéroatome choisi parmi O, S, N et P.

4. Renfort selon la revendication 1, dans lequel Z₁ et/ou Z₂, identiques ou différents, représentent un groupement aromatique comportant 6 à 30, de préférence 6 à 20 atomes de carbone, et optionnellement au moins un hétéroatome choisi parmi O, S, N et P.

5. Renfort selon la revendication 1, dans lequel Z₁ et/ou Z₂, identiques ou différents, comportent un groupement choisi parmi -(CH₂)ₓ-, -CH2-Ph-CH2-, -(CH2-CH2-X)ₙ- et -(CH(CH3)-CH2-X)ₙ-, « x » et « n » étant des entiers de 1 à 20, de préférence de 1 à 16, Ph représentant le noyau benzénique, et X représentant au moins un hétéroatome choisi parmi oxygène, soufre, azote et phosphore.

6. Renfort selon l'une quelconque des revendications 1 à 5, sous la forme d'un fil, film, ruban ou câble en acier au carbone.

7. Renfort selon la revendication 6, l'acier au carbone étant un acier clair.

8. Renfort selon la revendication 6, l'acier au carbone étant revêtu au moins en partie d'un second métal dit métal de surface, ce dernier étant préférentiellement choisi dans le groupe constitué par aluminium, cuivre, zinc et les alliages d'au moins un de ces métaux avec au moins un autre métal.

9. Renfort selon la revendication 8, le métal de surface étant du laiton.

10. Utilisation d'un renfort selon l'une quelconque des revendications 1 à 9 pour le renforcement d'un article en caoutchouc.

11. Utilisation selon la revendication 10, l'article en caoutchouc étant un bandage, pneumatique ou non pneumatique, pour véhicule automobile.

12. Article en caoutchouc renforcé par au moins un renfort selon l'une quelconque des revendications 1 à 9.

13. Bandage pour véhicule automobile, renforcé par au moins un renfort selon l'une quelconque des revendications 1 à 9.

## Patentansprüche

1. Metallische oder metallisierte Verstärkung, wobei mindestens eine Oberfläche davon mindestens teilweise metallisch ist, wobei mindestens der metallische Teil mit einem Polybenzoxazin beschichtet ist, dessen Wiederholungseinheiten mindestens eine Einheit umfassen, die den Formeln (I) oder (II) entspricht: 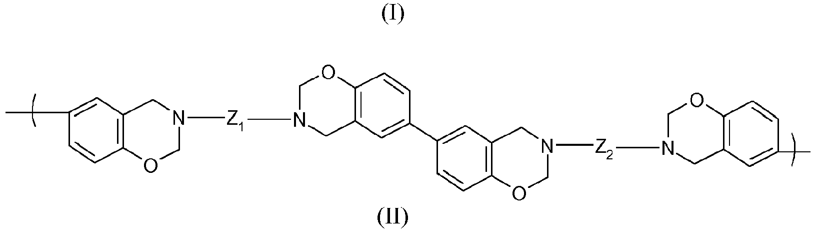 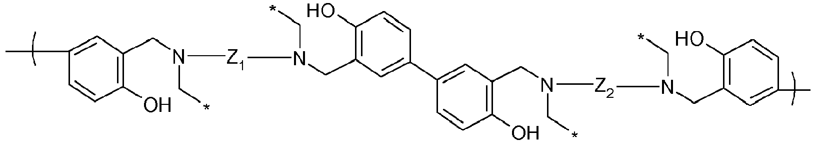 in denen Z₁ und Z₂ gleich oder verschieden sind und für eine mindestens zweiwertige, aliphatische, cycloaliphatische oder aromatische Verknüpfungsgruppe mit mindestens einem Kohlenstoffatom und gegebenenfalls mindestens einem Heteroatom, das aus 0, S, N und P ausgewählt ist, stehen.

2. Verstärkung nach Anspruch 1, wobei Z₁ und Z₂ gleich oder verschieden sind und für eine aliphatische Gruppe mit 1 bis 20 und vorzugsweise 1 bis 16 Kohlenstoffatomen oder eine cycloaliphatische Gruppe mit 3 bis 20 und vorzugsweise 3 bis 16 Kohlenstoffatomen und gegebenenfalls mindestens einem Heteroatom, das aus O, S, N und P ausgewählt ist, stehen.

3. Verstärkung nach Anspruch 2, wobei Z₁ und Z₂ gleich oder verschieden sind und für eine Alkylengruppe mit 1 bis 20 und vorzugsweise 1 bis 16 Kohlenstoffatomen und gegebenenfalls mindestens einem Heteroatom, das aus O, S, N und P ausgewählt ist, stehen.

4. Verstärkung nach Anspruch 1, wobei Z₁ und Z₂ gleich oder verschieden sind und für eine aromatische Gruppe mit 6 bis 30 und vorzugsweise 6 bis 20 Kohlenstoffatomen und gegebenenfalls mindestens einem Heteroatom, das aus O, S, N und P ausgewählt ist, stehen.

5. Verstärkung nach Anspruch 1, wobei Z₁ und Z₂ gleich oder verschieden sind und eine Gruppe, die aus -(CH₂)x-, -CH₂-PH-CH₂, -(CH₂-CH₂-X)ₙ- und -(CH(CH₃)-CH₂-X)ₙ- ausgewählt ist, umfassen, wobei "x" und "n" für ganze Zahlen von 1 bis 20 und vorzugsweise von 1 bis 16 stehen, Ph für den Benzolkern steht und X für mindestens ein Heteroatom, das aus Sauerstoff, Schwefel, Stickstoff und Phosphor ausgewählt ist, steht.

6. Verstärkung nach einem der Ansprüche 1 bis 5 in Form eines Fadens, eines Films, eines Bands oder eines Kabels aus unlegiertem Stahl.

7. Verstärkung nach Anspruch 6, wobei es sich bei dem unlegierten Stahl um einen blanken Stahl handelt.

8. Verstärkung nach Anspruch 6, wobei der unlegierte Stahl mindestens teilweise mit einem als Oberflächenmetall bezeichneten zweiten Metall beschichtet ist, wobei Letzteres vorzugsweise aus der Gruppe bestehend aus Aluminium, Kupfer, Zink und Legierungen von mindestens einem dieser Metalle mit mindestens einem anderen Metall ausgewählt ist.

9. Verstärkung nach Anspruch 8, wobei es sich bei dem Oberflächenmetall um Messing handelt.

10. Verwendung einer Verstärkung nach einem der Ansprüche 1 bis 9 zur Verstärkung eines Kautschukartikels.

11. Verwendung nach Anspruch 10, wobei es sich bei dem Kautschukartikel um einen Luftreifen oder luftlosen Reifen für ein Kraftfahrzeug handelt.

12. Kautschukgegenstand, der durch mindestens eine Verstärkung nach einem der Ansprüche 1 bis 9 verstärkt ist.

13. Reifen für Kraftfahrzeug, der durch mindestens eine Verstärkung nach einem der Ansprüche 1 bis 9 verstärkt ist.

## Claims

1. Metal or metallized reinforcer, at least the surface of which is at least partially metallic, at least said metallic part being coated with a polybenzoxazine, the repeat units of which comprise at least one unit corresponding to the formulae (I) or (II): 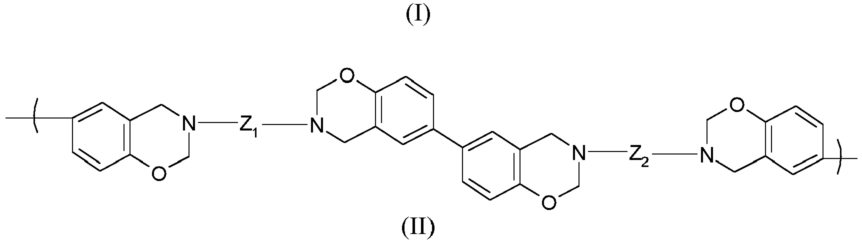 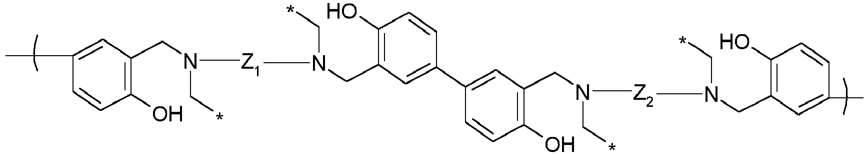 in which Z₁ and Z₂, which are identical or different, represent an at least divalent, aliphatic, cycloaliphatic or aromatic bonding group comprising at least one carbon atom and optionally at least one heteroatom selected from O, S, N and P.

2. Reinforcer according to Claim 1, in which Z₁ and/or Z₂, which are identical or different, represent an aliphatic group comprising from 1 to 20, preferably from 1 to 16, carbon atoms or a cycloaliphatic group comprising from 3 to 20, preferably from 3 to 16, carbon atoms, and optionally at least one heteroatom chosen from O, S, N and P.

3. Reinforcer according to Claim 2, in which Z₁ and/or Z₂, which are identical or different, represent an alkylene group comprising from 1 to 20, preferably from 1 to 16, carbon atoms, and optionally at least one heteroatom chosen from O, S, N and P.

4. Reinforcer according to Claim 1, in which Z₁ and/or Z₂, which are identical or different, represent an aromatic group comprising from 6 to 30, preferably from 6 to 20, carbon atoms, and optionally at least one heteroatom chosen from O, S, N and P.

5. Reinforcer according to Claim 1, in which Z₁ and/or Z₂, which are identical or different, comprise a group selected from -(CH₂)ₓ-, -CH₂-Ph-CH₂-, -(CH₂-CH₂-X)ₙ- and-(CH(CH₃)-CH₂-X)ₙ-, "x" and "n" being integers from 1 to 20, preferably from 1 to 16, Ph representing the benzene ring, and X representing at least one heteroatom chosen from oxygen, sulfur, nitrogen and phosphorus.

6. Reinforcer according to any one of Claims 1 to 5, in the form of a wire, film, tape or cord made of carbon steel.

7. Reinforcer according to Claim 6, the carbon steel being a bright steel.

8. Reinforcer according to Claim 6, the carbon steel being at least partially coated with a second metal, referred to as a surface metal, the latter being preferentially selected from the group consisting of aluminium, copper, zinc and alloys of at least one of these metals with at least one other metal.

9. Reinforcer according to Claim 8, the surface metal being brass.

10. Use of a reinforcer according to any one of Claims 1 to 9 for the reinforcement of a rubber article.

11. Use according to Claim 10, the rubber article being a pneumatic or non-pneumatic motor vehicle tyre.

12. Rubber article reinforced by at least one reinforcer according to any one of Claims 1 to 9.

13. Motor vehicle tyre, reinforced by at least one reinforcer according to any one of Claims 1 to 9.
